Europäisches Patentamt

European Patent Office

Office européen des brevets

(19)

(11) **EP 1 558 020 A2**

(12) ## EUROPEAN PATENT APPLICATION

(43) Date of publication:
**27.07.2005 Bulletin 2005/30**

(51) Int Cl.7: **H04N 1/60**, H04N 1/407

(21) Application number: **05100306.9**

(22) Date of filing: **19.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **23.01.2004 JP 2004015924**

(71) Applicant: **Konica Minolta Photo Imaging, Inc.**
**Shinjuku-ku, Tokyo 163-0512 (JP)**

(72) Inventors:
• **MINAKUTI, Jun**
**c/o Konica Minolta Photo Imaging,Inc**
**Sakai-shi Osaka, 590-8551 (JP)**

• **TAKANO, Hiroaki**
**c/o Konica Minolta Photo Imaging**
**Tokyo, 191-8511 (JP)**
• **NAKAJIMA, Takeshi**
**c/o Konica Minolta Photo Imaging**
**Tokyo, 191-8511 (JP)**
• **ITO, Tsukasa c/o Konica Minolta Photo Imaging**
**Tokyo, 191-8511 (JP)**

(74) Representative:
**Gille, Struck, Neidlein, Prop, Roos**
**Patentanwälte**
**Brucknerstrasse 20**
**40593 Düsseldorf (DE)**

(54) **Image processing apparatus, image processing method and image processing program**

(57) An image processing apparatus includes an image forward-transform section for applying an image forward-transform based on a color appearance model to an inputted scene referred raw datum; an image processing section for applying a tone and/or color correction using a correction parameter determined based on the scene referred raw datum or information related to the scene referred raw datum, and a gamut mapping corresponding to an output device; and an image inverse-transform section for applying an image inverse-transform of the image forward-transform after the image processing.

FIG. 3

**Description**

**FIELD OF THE INVENTION**

The present invention relates to an image processing apparatus, an image processing method and an image processing program all for outputting an image obtained through photographing by an image pickup apparatus such as a digital camera on an output device such as a monitor or a printer.

**BACKGROUND OF THE INVENTION**

When outputting an image obtained through photographing by an image pickup apparatus such as a digital camera on an output device such as various monitors or a printer, it is necessary to conduct various types of image processing on each stage on the half way, for the output results to look preferable. For example, tone and colors need to be transformed.

As the transform of this kind, there is a transform to be conducted first for correcting characteristics which are peculiar to an output device. For example, when outputting on CRT (Cathode Ray Tube) monitor (which will be called simply a monitor generically, hereafter), a monitor has its peculiar tone characteristics caused by a principle of a device wherein output luminance is proportional to the number of the power of luminance of photographing scene. On the other hand, an imaging sensor CCD (Charge Coupled Device) used usually for a digital camera outputs image data which are substantially proportional to luminance. Therefore, if data obtained through imaging by CCD are outputted on a monitor as they are, an image becomes one having luminance that is proportional to the number of the power of luminance of a photographing scene, resulting in characteristics which are not preferable. In the same way, the printer has its own tone characteristics, and a possibility for data obtained through imaging to be outputted to become a preferable image is low. Accordingly, it is necessary to transform tone of image data by adjusting them to tone characteristics of the output device, on the half way to outputting.

The foregoing applies also to colors in the same way, and an output device has its own reproduction primary color determined by coloring material (phosphor for monitor, dye for printer) to be used. Further, an imaging sensor such as CCD has its own spectral characteristics, and when image data obtained through photographing are outputted as they are, a possibility to obtain reproduction of colors which are close to the subject photographed is low. It is therefore necessary for image data to be subjected to color transform in accordance with relationship between spectral characteristics of the imaging sensor and a reproduction primary color of the output device.

Further, transform processing caused by the limitation of reproduction capability of the output device is needed in addition to transform for adjusting to characteristics peculiar to these output devices. The reproduction capability of the output device means tone and a range of reproduction of colors owned by the output device. In many cases, these are narrower, compared with luminance ranges (luminance threshold) of photographing scene and with colors of a subject. For example, a luminance area of an actual scene to be photographed arrives at an order of several thousands : 1 in the open air, frequently (for example, see page 926 of "Handbook of color science, Second Edition" edited by The Color Science Association of Japan, published from University of Tokyo Press). However, the luminance range which can be reproduced on a monitor display or a printer which is usually seen indoors is on a level of about several hundreds : 1 at the best. Therefore, when outputting information obtained by an image pickup apparatus such as an imaging sensor, luminance needs to be subjected to some kinds of compression. The foregoing applies also to colors in the same way, and for the subject which is more colorful than a color reproduction range obtained by coloring material of the output device, it is necessary to apply processing to compress within a color reproduction range of the output device and to assign them. A color reproduction range (color gamut) of the output device is called a gamut, and this processing to assign to the reproducible color is called a gamut mapping processing (color gamut mapping processing).

With respect to the processing as stated above to adjust to characteristics of the device, it is naturally necessary to change the contents of the processing for each device. There are various devices each having different characteristics in the market, and conducting appropriate processing for various combinations of these devices in various types is called color management, and its arrangement is called a color management system. Recently, color management is supported at the level of an operation system OS; Operation System) of a personal computer, and image processing application software can carry out these transforms by using OS services (for example, see Patent Document 1).

There are two points of view in the color management. One of them is a method wherein an exchange of data conducted between an input device and an output device is carried out by a color space that is defined in advance. Namely, the input device outputs image data wherein characteristics peculiar to the device are transformed into color space, and the output device conducts processing to adjust to characteristics peculiar to the device on the assumption that the data received are their color space, to output.

Another one is a method to prepare a data file called a device profile on which peculiar characteristics of the device are recorded and the data file is read by the color management system to conduct appropriate transform. As the device profile, ICC profile representing a format standardized by ICC (International Color Consortium) is frequently used.

In the case of a digital camera, the former method is frequently used, and a color space standardized based on characteristics of an average monitor called sRGB is used (see Multimedia Systems and Equipment-Colour Measurement and Management-Part 2-1: Colour Management-Default RGB Colour Space-sRGB IEC61966-2-1). Namely, data transformed into sRGB in the digital camera are outputted.

On the monitor, since sRGB is one determined by average characteristics of the monitor, a big error is not caused even when sRGB is outputted. For obtaining more accurate reproduction, ICC profile is used to output data wherein sRGB is transformed into characteristics peculiar to the monitor by an application software. In recent years, there are available many products wherein characteristics peculiar to the monitor are corrected on a hardware basis by adjusting to sRGB color space, and when these monitors are used, no problem is caused even when outputting is carried out without taking any actions.

On the printer, there are many cases to output data transformed by an application software from sRGB by adjusting to printer characteristics, by the use of ICC profile representing a latter method, although there is an occasion where image data received are processed as sRGB by the software on the printer side (printer driver).

As stated above, in the color management in the case of printing images taken by a digital camera, sRGB, namely, average monitor is a standard at present.

When transforming an image to be displayed on a monitor and a print image by the color management system as stated above, only correction of characteristics peculiar to the device is sometimes insufficient, for both images to look alike. The reason for the foregoing is as follows. Since the viewing condition for observing one image is different from that for observing the other image, visual characteristic of a human body is changed. Unless this is corrected, both images do not look alike. The viewing conditions include the contrast between a looked area and a peripheral area and a difference between a white color of monitor display and a light source color for illuminating a print.

In order to correct a difference of human visual characteristics caused by a difference of the viewing condition of this kind, a color appearance model (CAM; Color Appearance Model) is used. The color appearance model is a model with which the "color appearance" under the various viewing conditions can be estimated. Specifically, it is the model wherein the image transform in which the viewing condition serves as an image transform parameter (which is called an appearance parameter) is conducted from a colorimetry value, and a value expressing "color appearance" under the specified viewing condition can be calculated.

CIECAM97s which is recommended by INTERNATIONAL COMMITTEE OF ILLUMINATION (CIE) as a standard model is used frequently for the color appearance model. Furthermore, after an announcement of CIECAM97s, further improvements were made, and CIECAM02 is about to be recommended soon, as a substitute for CIECAM97s.

By using a color management system in which a color appearance model such as CIECAM is incorporated, it is possible to conduct transform that is necessary for images to look alike under different viewing conditions like monitor display and printing.

After passing through the transform stated above, an image taken by a digital camera is subjected to operations such as monitor display and printing, and a color space and sRGB which serve as a standard in the course of the operations have the following problems. Since sRGB is a color space which is adjusted to an average monitor as mentioned above, its color reproduction range is limited to the same range as that of the monitor substantially. However, the color reproduction range for the printer is broader than that of the monitor. For example, an area which cannot be reproduced by sRGB exists in a cyan area of an ink jet printer, and in a yellow area of a silver halide photography printer (for details, for example, see page 444 of "Fine Imageing and Digital Photography" published by Corona Co. edited by Publishing Committee of The Society of Photographic Science and Technology of Japan). Colors in these areas are not used in the present system wherein sRGB is a standard. Though colors belonging to the aforesaid areas exist in a subject to be photographed, these colors are compressed to the color reproduction range of sRGB to become difficult in terms of reproduction, although the printer has capability to reproduce these colors.

Recently, therefore, there has been thought out a technology to output image data correlated not with a color space adjusted to the monitor such as sRGB but with characteristics of an actual photographing scene from a digital camera. Namely, image data proportional to luminance of actual photographing scene which have been transformed into the color space defined colorimetrically are outputted from a digital camera. The data of this kind is called scene-referred raw data, or image data by scene-referred color space. AS the scene-referred color space, there are known, for example, RIMM RGB and ERIMM RGB (see page 418 - 426 of Journal of Imaging Science and Technology, Vol. 45 (2001)) or scRGB (IEC Standard 61966-2-2). On the other hand, the image data adjusted to an output device such as a conventional sRGB is called output-referred raw data.

(Patent Document 1) TOKKAI No. 2003-299116

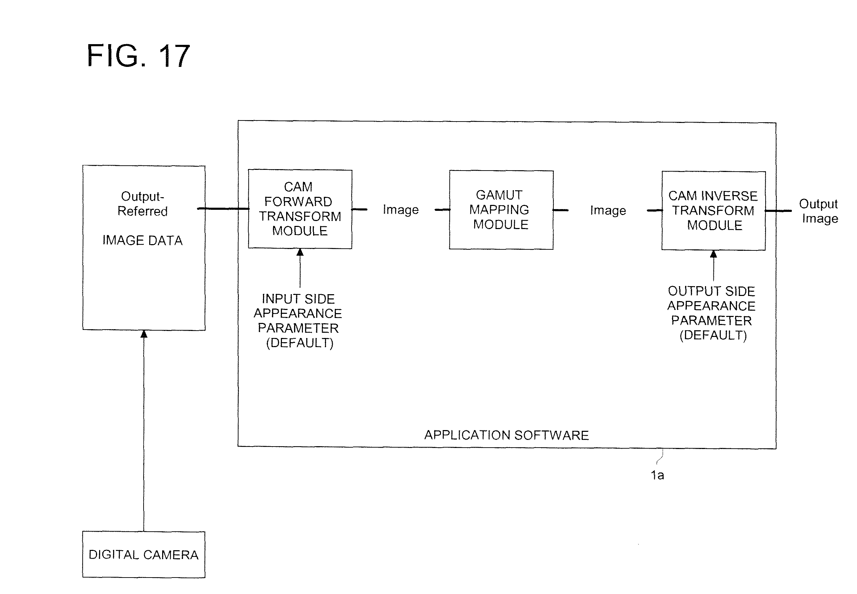

When scene-referred raw data represented by scRGB are outputted from a digital camera, it is necessary for the image data to be transformed by application software into output-referred raw that looks preferable on the output device. For this purpose, an application software corresponding to conventional color management system is used. Conventional application software 1a shown in Fig. 17 has functions of correction processing for viewing conditions and gamut mapping processing both by a color appearance model.

However, the conventional application software of this kind has a problem that scene-referred raw data cannot be transformed into output-referred raw data properly.

That is, a difference in human visual characteristics caused by photographing scene and by a difference of viewing conditions of output image cannot be corrected sufficiently. As stated above already, for correcting such difference of viewing conditions, a color appearance model is used, and in these ordinary color management systems, a color appearance model is used for the purpose of correcting the difference of viewing conditions between a monitor and a printer.

Viewing conditions for the monitor and the printer are usually fixed substantially, and they do not change greatly. Therefore, in the conventional color management system, an appearance parameter is optimized and fixed to the viewing conditions under the ordinary office environment, in many cases. Further, even in the case where a color appearance model is prepared as a standard in OS or the like, viewing conditions cannot be established freely in some cases.

However, viewing conditions in the case of viewing the actual photographing scene in the course of photographing by a digital camera are greatly different from viewing conditions in the case of viewing the monitor display and prints. For example, absolute luminance for the monitor display is substantially the same as that for prints, but a difference between the outdoor scene in the daytime and the monitor display and prints is extremely large.

Further, scenes to be photographed by a digital camera are multifarious to include bright scenes in the daytime and dark scenes such as night views, and viewing conditions vary greatly depending on photographing scenes. Even in the case where a viewing condition changes for each image data, the conventional system cannot cope with the changes properly.

When outputting the images taken by a digital camera, there is needed a processing to emphasize contrast and chroma of images for correction of Hunt effect and Stevens effect caused by a difference between photographing scene and output environment and for viewing flare in the case of observing output. The emphasizing processing of this kind is conducted in the inside of the digital camera at present. An image outputted from the digital camera is sRGB, but it is not a definition of sRGB itself, and it is one which has been subjected to this correction. Therefore, when processing scene-referred raw data with an application software, it is necessary to conduct this emphasizing processing somewhere. However, in the color management system wherein ordinary sRGB is processed, it is impossible to apply the transform, because the transform of this kind is not considered. As a result, it is impossible to transform scene-referred raw data preferably to output them.

Further, there is an occasion wherein an intentional correction is desired in addition to correction caused by a difference of the viewing conditions of this kind. For example, there is the actual that desired tone characteristics vary depending on a subject to be photographed. When an occasion of portrait photographing is compared with an occasion of scenery photographing, for example, an image whose contrast is relatively low is preferred by the portrait photographing. Further, desired tone characteristics vary depending on the ratio of a portrait to a picture area, namely, on an image magnification, and when the ratio of a portrait to a picture area is small, the tone characteristics in which the contrast is high to be close to that of scenery tend to be desired.

Such intentional tone correction processing for discrepancies of subjects has been conducted by internal processing of a digital camera. However, when scene-referred raw data are outputted from a digital camera, the aforementioned processing cannot be conducted, which has been a problem.

## SUMMARY OF THE INVENTION

A problem of the invention is to transform image data which are proportional to luminance of photographed scene so that they may look desirably, and to output them.

For solving the problem mentioned above, when outputting the inputted scene-referred raw data to a monitor or a printer, image transform based on a color appearance model is conducted on the scene-referred raw data, then, after the image transform, tone and/or color correction and color gamut mapping processing corresponding to an output equipment are conducted using a correction parameter determined by the scene-referred raw data or information relating to the scene-referred raw data. Then, after the tone and/or color correction and color gamut mapping processing, inverse transform for the image transform is carried out.

# EP 1 558 020 A2

## BRIEF DESCRIPTION OF THE DRAWINGS

Fig. 1 is a diagram showing relationship of connection between an image processing apparatus to which the invention is applied and on outer equipment.

Fig. 2 is a diagram showing the internal structure of a digital camera to which the invention is applied.

Fig. 3 is a diagram illustrating functions of application software owned by an image processing apparatus to which the invention is applied.

Fig. 4 is a diagram illustrating functions of application software owned by an image processing apparatus to which the invention is applied.

Fig. 5 is a diagram illustrating functions of application software owned by an image processing apparatus to which the invention is applied.

Fig. 6 is a flow chart for illustrating contents of processing by the application software shown in each of Figs. 3 - 5.

Fig. 7 is a flow chart for illustrating contents of processing by the photographing data analysis module shown in each of Figs. 3 - 5.

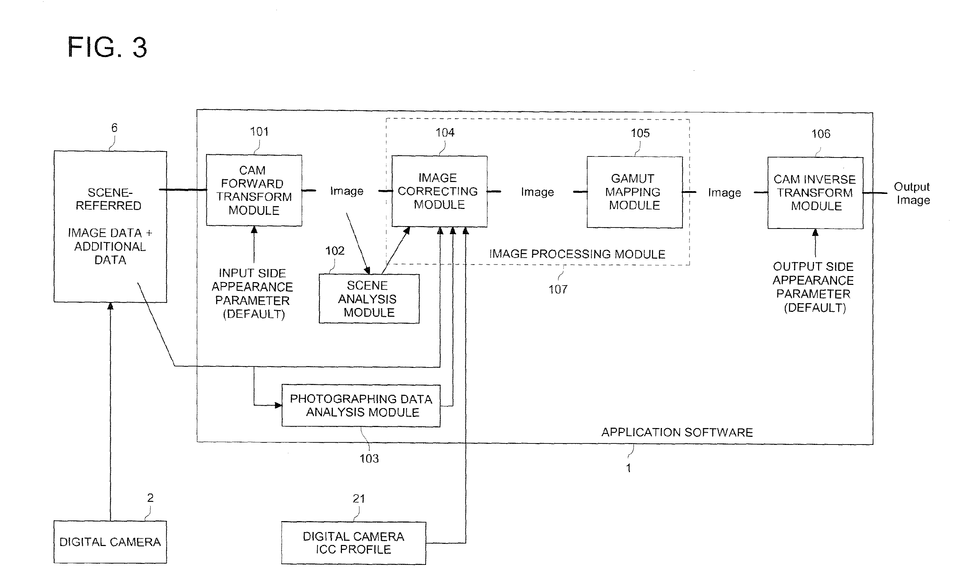

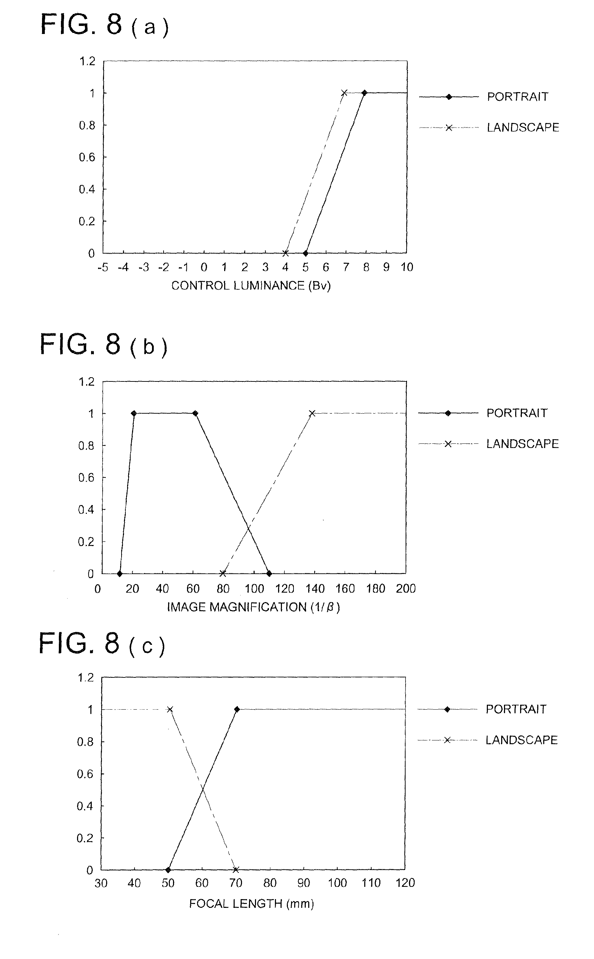

Each of Figs. 8 (a) - 8 (c) is a diagram showing a membership function used by the photographing data analysis module shown in each of Figs. 3 - 5.

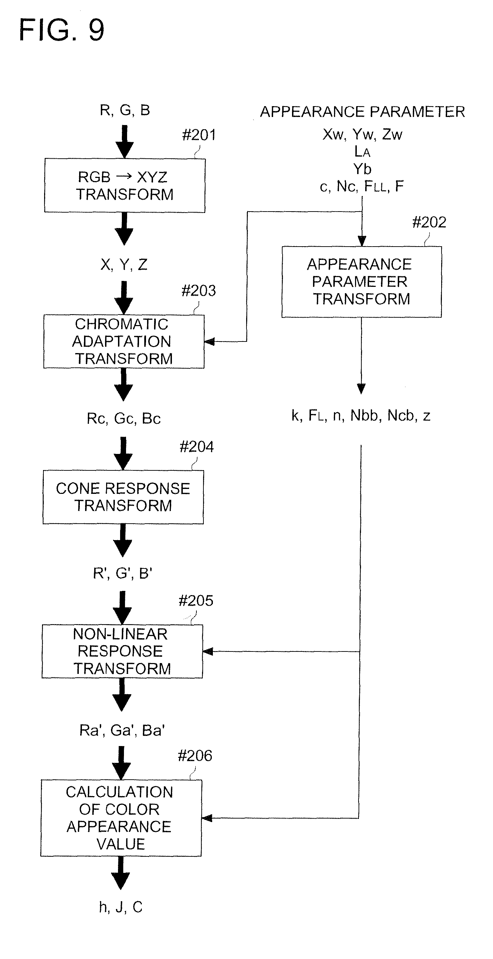

Fig. 9 is a flow chart for illustrating contents of processing of CAM forward transform based on CIECAM97s (CIECAM02) by CAM forward transform module shown in each of Figs. 3 - 5.

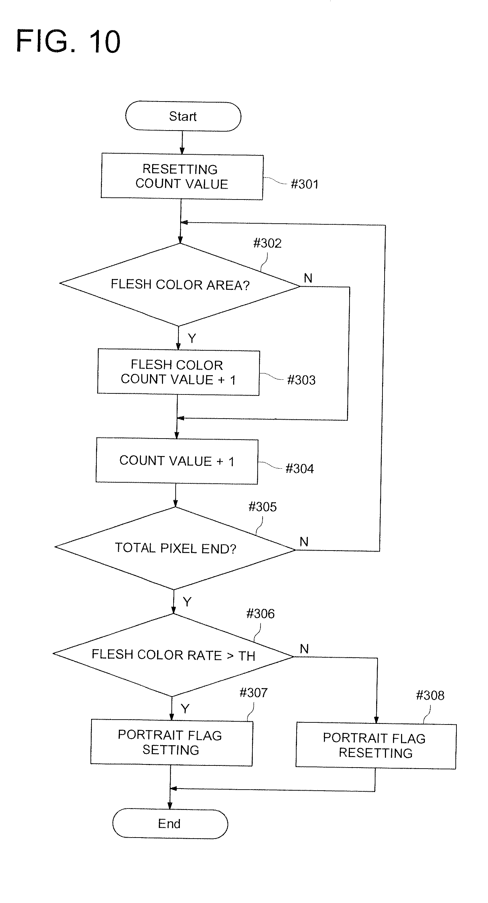

Fig. 10 is a flow chart for illustrating contents of processing by scene analysis module shown in each of Figs. 3 - 5.

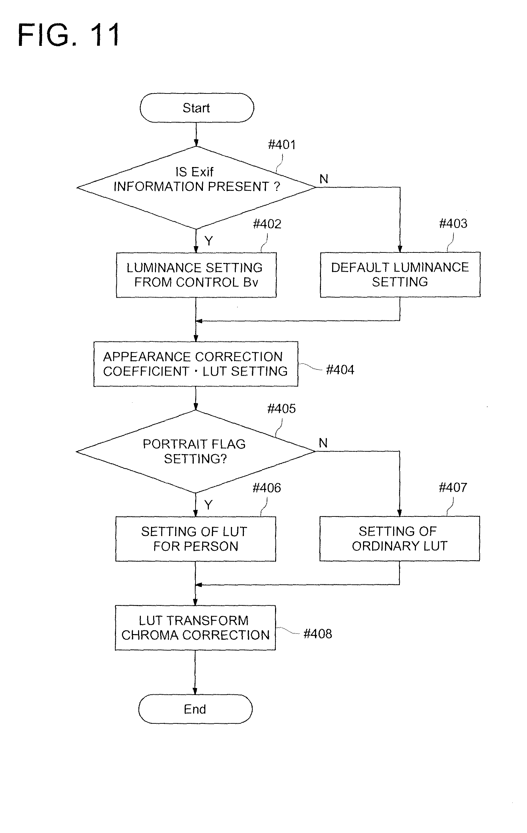

Fig. 11 is a flow chart for illustrating contents of processing by image correcting module 104 shown in each of Figs. 3 - 5.

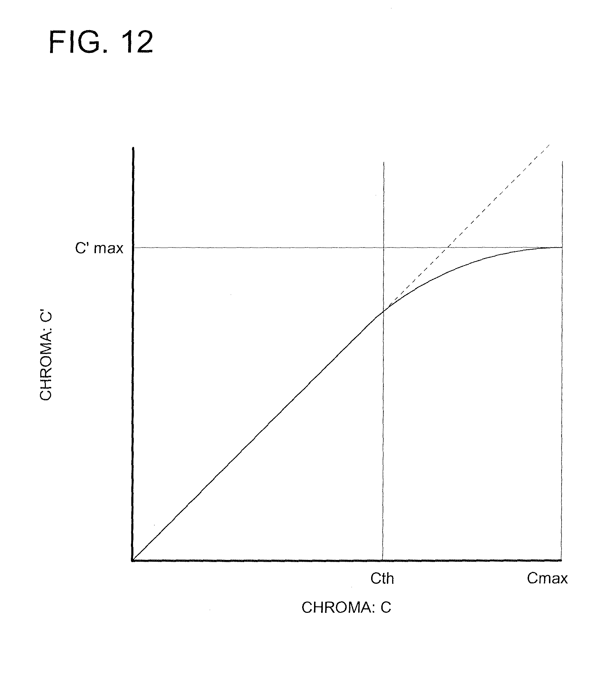

Fig. 12 is a graph showing chroma compression.

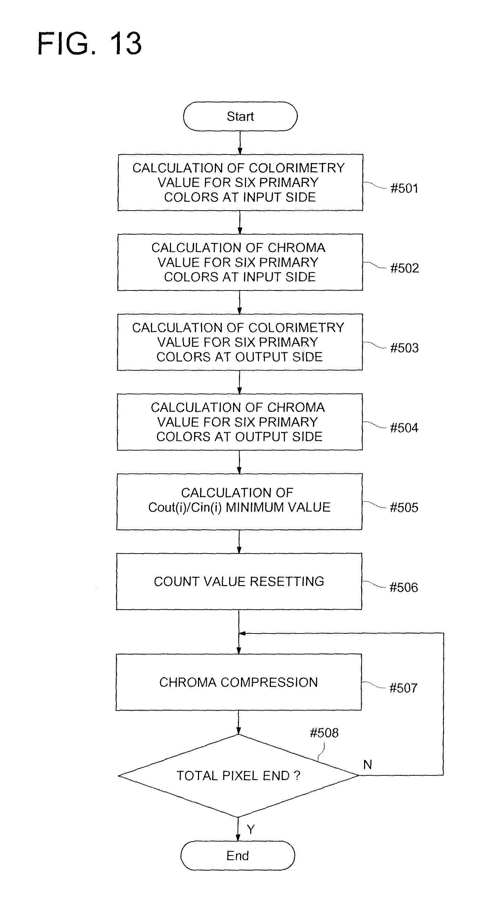

Fig. 13 is a flow chart for illustrating contents of processing by gamut mapping module shown in each of Figs. 3 - 5.

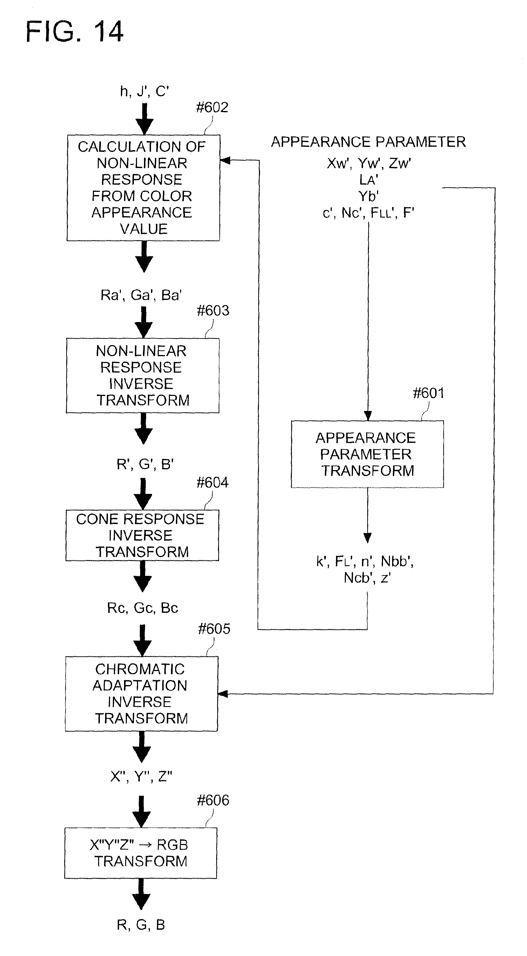

Fig. 14 is a flow chart for illustrating contents of processing of CAM inverse and forward transforms based on CIECAM97s (CIECAM02) by CAM inverse transform module shown in each of Figs. 3 - 5.

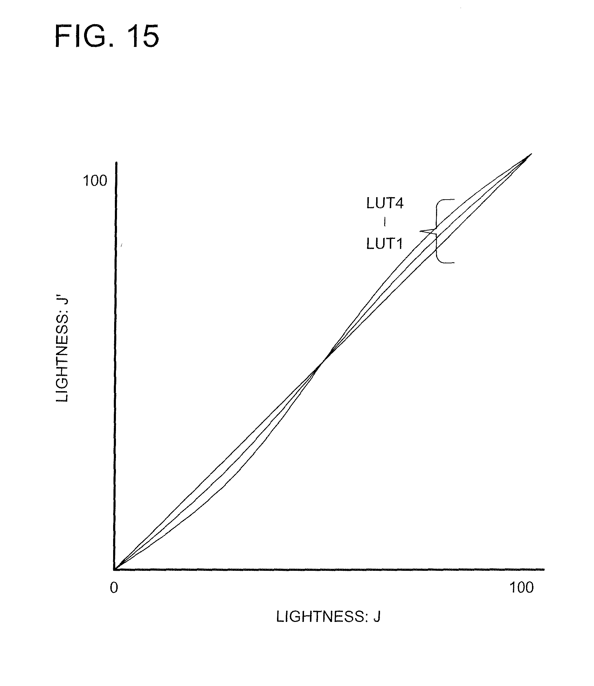

Fig. 15 is a diagram showing an example of LUT for appearance correction.

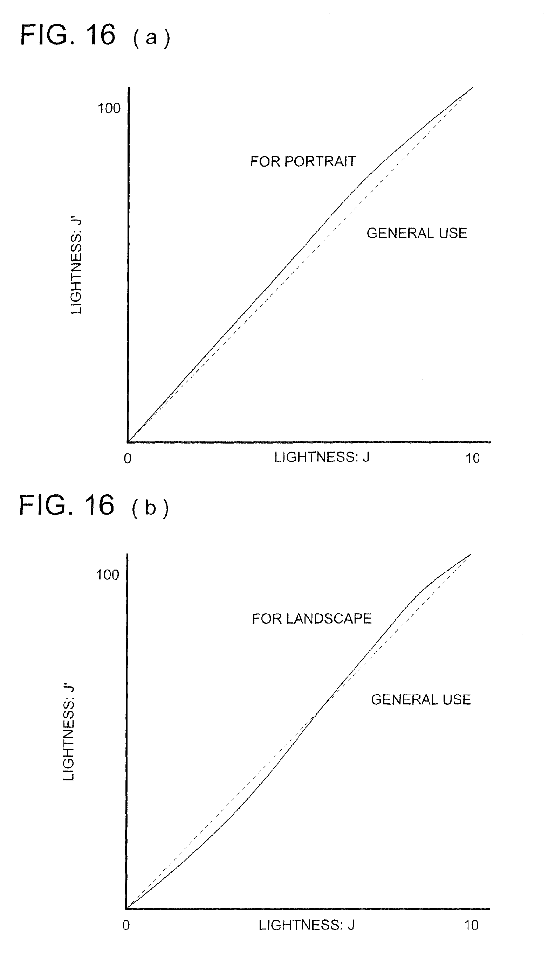

Each of Figs. 16 (a) and 16 (b) is a diagram showing an example of LUT for scene correction.

Fig. 17 is a diagram for illustrating functions of a conventional application software.

## DETAILED DESCRIPTION OF THE INVENTION

Preferred embodiments of the invention will be explained as follows.

In the embodiment described in Item 1-1, an image processing apparatus comprising: an image forward-transform section for applying an image forward-transform based on a color appearance model to an inputted scene referred raw datum; an image processing section for applying a tone and/or color correction using a correction parameter determined based on the scene referred raw datum or information related to the scene referred raw datum, and a gamut mapping corresponding to an output device; and an image inverse-transform section for applying an image inverse-transform of the image forward-transform after the image processing.

The embodiment described in Item 1-2 is the image processing apparatus of Item 1-1, wherein the image processing section comprises an image correcting section for applying a tone and/or color correction to the scene referred raw datum which is applied the image forward-transform, using a correction parameter determined based on the scene referred raw datum or information related to the scene referred raw datum and a gamut mapping section for applying a gamut mapping to the corrected data corresponding to the output device.

The embodiment described in Item 1-3 is the image processing apparatus of Item 1-2 wherein the image correcting section applies the tone and/or color correction to the scene referred raw datum applied the image forward-transformation, using a correction parameter related to the scene referred raw datum.

The embodiment described in Item 1-4 is the image processing apparatus of Item 1-2, further comprising a photographing condition analyzing section for determining the correcting parameter to the scene referred raw datum using information related, wherein the image correcting section applies the tone and/or color correction to the scene referred raw datum applied the image forward-transformation, using the determined correction parameter.

The embodiment described in Item 1-5 is the image processing apparatus of Item 1-2, further comprising a scene analyzing section for determining the correction parameter using the scene referred raw datum, wherein the image correcting section applies the tone and/or color correction to the scene referred raw datum applied the image forward-transformation, using the determined correction parameter.

The embodiment described in Item 1-6 is the image processing apparatus of Item 1-1, wherein the image processing section comprises a gamut mapping section for applying a gamut mapping to the scene referred raw datum which is applied the image forward-transform, corresponding to the output device and an image correcting section for applying a tone and/or color correction simultaneously with the gamut mapping using the correction parameter determined based on the scene referred raw datum or information related to the scene referred raw datum.

The embodiment described in Item 1-7 is the image processing apparatus of Item 1-6, wherein the image correcting section applies the tone and/or color correction simultaneously with the gamut mapping to the scene referred raw datum which is applied the image forward-transform, using a correction parameter related to the scene referred raw datum.

The embodiment described in Item 1-8 is the image processing apparatus of Item 1-6, further comprising a photographing condition analyzing section for determining the correction parameter using information related to the scene referred raw datum, wherein the image correcting section applies the tone and/or color correction simultaneously with the gamut mapping to the scene referred raw datum which is applied the image forward-transform, using the determined correction parameter.

The embodiment described in Item 1-9 is the image processing apparatus of Item 1-6, further comprising a scene condition analyzing section for determining the correction parameter using information related to the scene referred raw datum, wherein the image correcting section applies the tone and/or color correction simultaneously with the gamut mapping to the scene referred raw datum which is applied the image forward-transform, using the determined correction parameter.

The embodiment described in Item 1-10 is the image processing apparatus of Item 1-1, wherein the image processing section comprises a gamut mapping section for applying a gamut mapping to the scene referred raw datum which is applied the image forward-transform, corresponding to the output device and an image correcting section for applying a tone and/or color correction after the gamut mapping using the correction parameter determined based on the scene referred raw datum or information related to the scene referred raw datum.

The embodiment described in Item 1-11 is the image processing apparatus of Item 1-10, wherein the image correcting section applies the tone and/or color correction to the scene referred raw datum which is applied the gamut mapping, using a correction parameter related to the scene referred raw datum.

The embodiment described in Item 1-12 is the image processing apparatus of Item 1-10, further comprising a photographing condition analyzing section for determining the correction parameter using information related to the scene referred raw datum, wherein the image correcting section applies the tone and/or color correction to the scene referred raw datum which is applied the gamut mapping, using the determined correction parameter.

The embodiment described in Item 1-13 is the image processing apparatus of Item 1-10, further comprising a scene condition analyzing section for determining the correction parameter using the scene referred raw datum, wherein the image correcting section applies the tone and/or color correction to the scene referred raw datum which is applied the gamut mapping, using the determined correction parameter.

The embodiment described in Item 1-14 is the image processing apparatus of any one of Items 1-1 through 1-13, wherein the tone and/or color correction is a correction for an image contrast enhancement.

The embodiment described in Item 1-15 is the image processing apparatus of any one of Items 1-1 through 1-13, wherein the tone and/or color correction is a correction for an image chroma enhancement.

The embodiment described in Item 1-16 is the image processing apparatus of any one of Items 1-1 through 1-15, wherein the color appearance model is CIECAM97s.

The embodiment described in Item 1-17 is the image processing apparatus of any one of Items 1-1 through 1-15, wherein the color appearance model is CIECAM02s.

The embodiment described in Item 1-18 is the image processing apparatus of any one of Items 1-1 through 1-17, wherein the information related to the scene referred raw datum is information representing a photographed-scene type and/or information relating to the photographing condition and the information is added to the tag information area of the scene referred raw datum as meta information.

In the embodiment described in Item 1-19, an image processing method comprising: an image forward-transform step of applying an image forward-transform based on a color appearance model to an inputted scene referred raw datum; an image processing step of applying a tone and/or color correction using a correction parameter determined based on the scene referred raw datum or information related to the scene referred raw datum, and a gamut mapping corresponding to an output device; and an image inverse-transform step of applying an image inverse-transform of the image forward-transform after the image processing.

The embodiment described in Item 1-20 is the image processing method of Item 1-19, wherein the image processing step comprises an image correcting step for applying a tone and/or color correction to the scene referred raw datum which is applied the image forward-transform, using a correction parameter determined based on the scene referred raw datum or information related to the scene referred raw datum and a gamut mapping step of applying a gamut mapping to the corrected data corresponding to the output device.

The embodiment described in Item 1-21 is the image processing method of Item 1-20, wherein the image correcting step applies the tone and/or color correction to the scene referred raw datum applied the image forward-transformation, using a correction parameter related to the scene referred raw datum.

The embodiment described in Item 1-22 is the image processing method of Item 1-20, further comprising a photographing condition analyzing step of determining the correcting parameter to the scene referred raw datum using information related, wherein the image correcting step applies the tone and/or color correction to the scene referred raw datum applied the image forward-transformation, using the determined correction parameter.

The embodiment described in Item 1-23 is the image processing method of Item 1-20, further comprising a scene analyzing step of determining the correction parameter using the scene referred raw datum, wherein the image correcting step applies the tone and/or color correction to the scene referred raw datum applied the image forward-transformation, using the determined correction parameter.

The embodiment described in Item 1-24 is the image processing method of Item 1-19, wherein the image processing step comprises a gamut mapping step of applying a gamut mapping to the scene referred raw datum which is applied the image forward-transform, corresponding to the output device and an image correcting step of applying a tone and/or color correction simultaneously with the gamut mapping using the correction parameter determined based on the scene referred raw datum or information related to the scene referred raw datum.

The embodiment described in Item 1-25 is the image processing method of Item 1-24, wherein the image correcting step applies the tone and/or color correction simultaneously with the gamut mapping to the scene referred raw datum which is applied the image forward-transform, using a correction parameter related to the scene referred raw datum.

The embodiment described in Item 1-26 is the image processing method of Item 1-24, further comprising a photographing condition analyzing step of determining the correction parameter using information related to the scene referred raw datum, wherein the image correcting step applies the tone and/or color correction simultaneously with the gamut mapping to the scene referred raw datum which is applied the image forward-transform, using the determined correction parameter.

The embodiment described in Item 1-27 is the image processing method of Item 1-24, further comprising a scene condition analyzing step of determining the correction parameter using information related to the scene referred raw datum, wherein the image correcting step applies the tone and/or color correction simultaneously with the gamut mapping to the scene referred raw datum which is applied the image forward-transform, using the determined correction parameter.

The embodiment described in Item 1-28 is the image processing method of Item 1-19, wherein the image processing step comprises a gamut mapping step of applying a gamut mapping to the scene referred raw datum which is applied the image forward-transform, corresponding to the output device and an image correcting step of applying a tone and/or color correction after the gamut mapping using the correction parameter determined based on the scene referred raw datum or information related to the scene referred raw datum.

The embodiment described in Item 1-29 is the image processing method of Item 1-28, wherein the image correcting step applies the tone and/or color correction to the scene referred raw datum which is applied the gamut mapping, using a correction parameter related to the scene referred raw datum.

The embodiment described in Item 1-30 is the image processing method of Item 1-28, further comprising a photographing condition analyzing step of determining the correction parameter using information related to the scene referred raw datum, wherein the image correcting step applies the tone and/or color correction to the scene referred raw datum which is applied the gamut mapping, using the determined correction parameter.

The embodiment described in Item 1-31 is the image processing method of Item 1-28, further comprising a scene condition analyzing step of determining the correction parameter using the scene referred raw datum, wherein the image correcting step applies the tone and/or color correction to the scene referred raw datum which is applied the gamut mapping, using the determined correction parameter.

The embodiment described in Item 1-32 is the image processing method of any one of Items 1-19 through 1-31, wherein the tone and/or color correction is a correction for an image contrast enhancement.

The embodiment described in Item 1-33 is the image processing method of any one of Items 1-19 through 1-31, wherein the tone and/or color correction is a correction for an image chroma enhancement.

The embodiment described in Item 1-34 is the image processing method of any one of Items 1-19 through 1-33, wherein the color appearance model is CIECAM97s.

The embodiment described in Item 1-35 is the image processing method of any one of Items 1-19 through 1-33, wherein the color appearance model is CIECAM02s.

The embodiment described in Item 1-36 is the image processing method of any one of Items 1-19 through 1-35, wherein the information related to the scene referred raw datum is information representing a photographed-scene type and/or information relating to the photographing condition and the information is added to the tag information area of the scene referred raw datum as meta information.

In the embodiment described in Item 1-37, an image processing program comprising: an image forward-transform step of applying an image forward-transform based on a color appearance model to an inputted scene referred raw datum; an image processing step of applying a tone and/or color correction using a correction parameter determined based on the scene referred raw datum or information related to the scene referred raw datum, and a gamut mapping corresponding to an output device; and an image inverse-transform step of applying an image inverse-transform of the image forward-transform after the image processing.

The embodiment described in Item 1-38 is the image processing program of Item 1-37, wherein the image processing step comprises an image correcting step of applying a tone and/or color correction to the scene referred raw datum which is applied the image forward-transform, using a correction parameter determined based on the scene referred raw datum or information related to the scene referred raw datum and

a gamut mapping step of applying a gamut mapping to the corrected data corresponding to the output device.

The embodiment described in Item 1-39 is the image processing program of Item 1-38, wherein the image correcting step applies the tone and/or color correction to the scene referred raw datum applied the image forward-transformation, using a correction parameter related to the scene referred raw datum.

The embodiment described in Item 1-40 is the image processing program of Item 1-38, further comprising a photographing condition analyzing step of determining the correcting parameter to the scene referred raw datum using information related, wherein the image correcting step applies the tone and/or color correction to the scene referred raw datum applied the image forward-transformation, using the determined correction parameter.

The embodiment described in Item 1-41 is the image processing program of Item 1-38, further comprising a scene analyzing step of determining the correction parameter using the scene referred raw datum, wherein the image correcting step applies the tone and/or color correction to the scene referred raw datum applied the image forward-transformation, using the determined correction parameter.

The embodiment described in Item 1-42 is the image processing program of Item 1-37, wherein the image processing step comprises a gamut mapping step of applying a gamut mapping to the scene referred raw datum which is applied the image forward-transform, corresponding to the output device and an image correcting step of applying a tone and/or color correction simultaneously with the gamut mapping using the correction parameter determined based on the scene referred raw datum or information related to the scene referred raw datum.

The embodiment described in Item 1-43 is the image processing program of Item 1-42, wherein the image correcting step applies the tone and/or color correction simultaneously with the gamut mapping to the scene referred raw datum which is applied the image forward-transform, using a correction parameter related to the scene referred raw datum.

The embodiment described in Item 1-44 is the image processing program of Item 1-42, further comprising a photographing condition analyzing step of determining the correction parameter using information related to the scene referred raw datum, wherein the image correcting step applies the tone and/or color correction simultaneously with the gamut mapping to the scene referred raw datum which is applied the image forward-transform, using the determined correction parameter.

The embodiment described in Item 1-45 is the image processing program of Item 1-42, further comprising a scene condition analyzing step of determining the correction parameter using information related to the scene referred raw datum, wherein the image correcting step applies the tone and/or color correction simultaneously with the gamut mapping to the scene referred raw datum which is applied the image forward-transform, using the determined correction parameter.

The embodiment described in Item 1-46 is the image processing program of Item 1-37, wherein the image processing step comprises a gamut mapping step of applying a gamut mapping to the scene referred raw datum which is applied the image forward-transform, corresponding to the output device and an image correcting step of applying a tone and/or color correction after the gamut mapping using the correction parameter determined based on the scene referred raw datum or information related to the scene referred raw datum.

The embodiment described in Item 1-47 is the image processing program of Item 1-46, wherein the image correcting step applies the tone and/or color correction to the scene referred raw datum which is applied the gamut mapping, using a correction parameter related to the scene referred raw datum.

The embodiment described in Item 1-48 is the image processing program of Item 1-46, further comprising a photographing condition analyzing step of determining the correction parameter using information related to the scene referred raw datum, wherein the image correcting step applies the tone and/or color correction to the scene referred raw datum which is applied the gamut mapping, using the determined correction parameter.

The embodiment described in Item 1-49 is the image processing program of Item 1-46, further comprising a scene condition analyzing step of determining the correction parameter using the scene referred raw datum, wherein the image correcting step applies the tone and/or color correction to the scene referred raw datum which is applied the gamut mapping, using the determined correction parameter.

The embodiment described in Item 1-50 is the image processing program of any one of Items 1-37 through 1-49, wherein the tone and/or color correction is a correction for an image contrast enhancement.

The embodiment described in Item 1-51 is the image processing program of any one of Items 1-37 through 1-49, wherein the tone and/or color correction is a correction for an image chroma enhancement.

The embodiment described in Item 1-52 is the image processing program of any one of Items 1-37 through 1-51, wherein the color appearance model is CIECAM97s.

The embodiment described in Item 1-53 is the image processing program of any one of Items 1-37 through 1-51, wherein the color appearance model is CIECAM02s.

The embodiment described in Item 1-54 is the image processing program of any one of Items 1-37 through 1-53, wherein the information related to the scene referred raw datum is information representing a photographed-scene type and/or information relating to the photographing condition and the information is added to the tag information area of the scene referred raw datum as meta information.

Another Preferred embodiments of the invention will be explained as follows.

In the embodiment described in Item 2-1, image transform based on a color appearance model is conducted on the inputted scene-referred raw data, then, after the image transform, correction of tones and/or colors is conducted, then, after the correction, color gamut mapping processing corresponding to output equipment is conducted, and an inverse transform of the image transform is conducted after the color gamut mapping processing, to output.

Further, in the embodiment described in Item 2-1 as in the embodiment described in Item 2-2, it is preferable to conduct correction of the tones and/or colors based on parameters for correction to be related to the scene-referred raw data.

In addition, in the embodiment described in Item 2-1 as in the embodiment described in Item 2-3, it is preferable to specify the parameter for correction from additional information of the scene-referred raw data, and to conduct correction of the tones and/or colors based on the specified parameter for correction.

Further, in the embodiment described in Item 2-1 as in the embodiment described in Item 2-4, it is preferable to specify the parameter for correction from the scene-referred raw data, and to conduct correction of the tones and/or colors based on the parameter for correction.

Further, in the embodiment described in any one of Items 2-1 through 2-4 as in the embodiment described in Item 2-5, it is preferable that the correction of the tones and/or colors is correction to emphasize contrast of images.

Further, in the embodiment described in any one of Items 2-1 through 2-4 as in the embodiment described in Item 2-6, it is preferable that the correction of the tones and/or colors is correction to emphasize chroma of images.

To solve the problems stated above, in the embodiment described in Item 2-7, image transform based on a color appearance model is conducted on the inputted scene-referred raw data, then, after the image transform, correction of tones and/or colors based on the parameter for color gamut mapping to be related to scene-referred raw data is conducted simultaneously with color gamut mapping processing corresponding to output equipment, and an inverse transform of the image transform is conducted after the color gamut mapping processing, to output.

To solve the problems stated above, in the embodiment described in Item 2-8, image transform based on a color appearance model is conducted on the inputted scene-referred raw data, then, after the image transform, correction of tones and/or colors based on the parameter for color gamut mapping specified from additional information of scene-referred raw data is conducted simultaneously with color gamut mapping processing corresponding to output equipment, and an inverse transform of the image transform is conducted after the color gamut mapping processing, to output.

To solve the problems stated above, in the embodiment described in Item 2-9, image transform based on a color appearance model is conducted on the inputted scene-referred raw data, then, after the image transform, correction of tones and/or colors based on the parameter for color gamut mapping specified from scene-referred raw data is conducted simultaneously with color gamut mapping processing corresponding to output equipment, and an inverse transform of the image transform is conducted after the color gamut mapping processing, to output.

Further, in the embodiment described in any one of Items 2-7 through 2-9 as in the embodiment described in Item 2-10, it is preferable that the color gamut mapping processing includes processing to emphasize contrast of images.

Further, in the embodiment described in any one of Items 2-7 through 2-9 as in the embodiment described in Item 2-11, it is preferable that the color gamut mapping processing includes processing to emphasize chroma of images.

To solve the problems stated above, in the embodiment described in Item 2-12, image transform based on a color appearance model is conducted on the inputted scene-referred raw data, then, after the image transform, color gamut mapping processing corresponding to output equipment is conducted, then, after the color gamut mapping processing, correction of tones and/or colors is conducted, and an inverse transform of the image transform is conducted after the correction, to output.

Further, in the embodiment described in Item 2-12 as in the embodiment described in Item 2-13, it is preferable that the correction of the tones and/or colors is conducted based on the parameter for correction to be related to the scene-referred raw data.

Further, in the embodiment described in Item 2-12 as in the embodiment described in Item 2-14, it is preferable to specify the parameter for correction from additional information of the scene-referred raw data, and to conduct correction of the tones and/or colors based on the parameter for correction specified.

Further, in the embodiment described in Item 2-12 as in the embodiment described in Item 2-15, it is preferable to specify the parameter for correction from the scene-referred raw data, and to conduct correction of the tones and/ or colors based on the parameter for correction.

Further, in the embodiment described in any one of Items 2-12 through 2-15 as in the embodiment described in Item 2-16, it is preferable that the correction of the tones and/or colors is correction for emphasizing a contrast of images.

Further, in the embodiment described in any one of Items 2-12 through 2-15 as in the embodiment described in Item 2-17, it is preferable that the correction of the tones and/or colors is correction for emphasizing chroma of images.

Further, in the embodiment described in any one of Items 2-1 through 2-17 as in the embodiment described in Item 2-18, it is preferable that the color appearance model is CIECAM97s.

Further, in the embodiment described in any one of Items 2-1 through 2-17 as in the embodiment described in Item 2-19, it is preferable that the color appearance model is CIECAM02.

Further, in the embodiment described in any one of Items 2-3, 2-8 and 2-14 as in the embodiment described in Item 2-20, it is preferable that the additional information of the scene-referred raw data is information included in Exif file format.

To solve the problems stated above, in the embodiment described in Item 2-21, image transform based on a color appearance model is conducted on the inputted scene-referred raw data, then, after the image transform, correction of tones and/or colors is conducted, then, color gamut mapping processing corresponding to output equipment is conducted after the correction, and an inverse transform of the image transform is conducted after the color gamut mapping processing.

Further, in the embodiment described in Item 2-21 as in the embodiment described in Item 2-22, it is preferable to conduct correction of the tones and/or colors based on the parameter for correction related to the scene-referred raw data.

Further, in the embodiment described in Item 2-21 as in the embodiment described in Item 2-23, it is preferable to specify the parameter for correction from additional information of the scene-referred raw data, and to conduct correction of the tones and/or colors based on the specified parameter for correction.

Further, in the embodiment described in Item 2-21 as in the embodiment described in Item 2-24, it is preferable to specify the parameter for correction from the scene-referred raw data, and to conduct correction of the tones and/ or colors based on the parameter for correction.

Further, in the embodiment described in any one of Items 2-21 through 2-24 as in the embodiment described in Item 2-25, it is preferable that the correction of the tones and/or colors is correction for emphasizing a contrast of images.

Further, in the embodiment described in any one of Items 2-21 through 2-24 as in the embodiment described in Item 2-26, it is preferable that the correction of the tones and/or colors is correction for emphasizing chroma of images.

To solve the problems stated above, in the embodiment described in Item 2-27, image transform based on a color appearance model is conducted on the inputted scene-referred raw data, then, after the image transform, correction of tones and/or colors based on the parameter for color gamut mapping related to the scene-referred raw data is conducted simultaneously with color gamut mapping processing corresponding to output equipment after the image transform, and an inverse transform of the image transform is conducted after the color gamut mapping processing, for outputting.

To solve the problems stated above, in the embodiment described in Item 2-28, image transform based on a color appearance model is conducted on the inputted scene-referred raw data, then, after the image transform, correction of tones and/or colors based on the parameter for color gamut mapping specified from additional information of the scene-referred raw data is conducted simultaneously with color gamut mapping processing corresponding to output equipment after the image transform, and an inverse transform of the image transform is conducted after the color gamut mapping processing, for outputting.

To solve the problems stated above, in the embodiment described in Item 2-29, image transform based on a color appearance model is conducted on the inputted scene-referred raw data, then, after the image transform, correction of tones and/or colors based on the parameter for color gamut mapping specified from the scene-referred raw data is conducted simultaneously with color gamut mapping processing corresponding to output equipment after the image transform, and an inverse transform of the image transform is conducted after the color gamut mapping processing, for outputting.

Further, in the embodiment described in any one of Items 2-27 through 2-29 as in the embodiment described in Item 2-30, it is preferable that the color gamut mapping processing includes processing for emphasizing contrast of images.

Further, in the embodiment described in any one of Items 2-27 through 2-29 as in the embodiment described in Item 2-31, it is preferable that the color gamut mapping processing includes processing for emphasizing chroma of images.

To solve the problems stated above, in the embodiment described in Item 2-32, image transform based on a color appearance model is conducted on the inputted scene-referred raw data, then, color gamut mapping processing corresponding to output equipment is conducted after the image transform, then, correction of tones and/or colors is conducted after the color gamut mapping processing and an inverse transform of the image transform is conducted after the correction, for outputting.

Further, in the embodiment described in Item 2-32 as in the embodiment described in Item 2-33, it is preferable to conduct correction of the tones and/or colors based on the parameter for correction to be related to the scene-referred raw data.

Further, in the embodiment described in Item 2-32 as in the embodiment described in Item 2-34, it is preferable to specify the parameter for correction from additional information of the scene-referred raw data, and to conduct correction of the tones and/or colors based on the specified parameter for correction.

Further, in the embodiment described in Item 2-32 as in the embodiment described in Item 2-35, it is preferable to specify the parameter for correction from the scene-referred raw data, and to conduct correction of the tones and/or colors based on the parameter for correction.

Further, in the embodiment described in any one of Items 2-32 through 2-35 as in the embodiment described in Item 2-36, it is preferable that the correction of the tones and/or colors is correction for emphasizing contrast of images.

Further, in the embodiment described in any one of Items 2-32 through 2-35 as in the embodiment described in Item 2-37, it is preferable that the correction of the tones and/or colors is correction for emphasizing chroma of images.

Further, in the embodiment described in any one of Items 2-21 through 2-37 as in the embodiment described in Item 2-38, it is preferable that the color appearance model is CIECAM97s.

Further, in the embodiment described in any one of Items 2-21 through 2-37 as in the embodiment described in Item 2-39, it is preferable that the color appearance model is CIECAM02.

Further, in the embodiment described in any one of Items 2-23, 2-28 and 2-34 as in the embodiment described in Item 2-40, it is preferable that the additional information of the scene-referred raw data is information included in Exif file format.

To solve the problems stated above, in the embodiment described in Item 2-41, there is realized, in the computer conducting image processing, the functions to conduct image transform based on a color appearance model on the inputted scene-referred raw data, then, to conduct correction of tones and/or colors after the image transform, and then, to conduct color gamut mapping processing corresponding to output equipment after the correction, and to conduct an inverse transform of the image transform after the color gamut mapping processing, for outputting.

Further, in the embodiment described in Item 2-41 as in the embodiment described in Item 2-42, it is preferable that the function to conduct correction of the tones and/or colors based on the parameter for correction to be related to the scene-referred raw data is further realized on the computer.

Further, in the embodiment described in Item 2-41 as in the embodiment described in Item 2-43, it is preferable that the functions to specify a parameter for correction from additional information of the scene-referred raw data and to conduct correction of the tones and/or colors based on the specified parameter for correction are further realized in the aforesaid computer.

Further, in the embodiment described in Item 2-41 as in the embodiment described in Item 2-44, it is preferable that the functions to specify a parameter for correction from the scene-referred raw data and to conduct correction of the tones and/or colors based on the parameter for correction are further realized in the aforesaid computer.

Further, in the embodiment described in any one of Items 2-41 through 2-44 as in the embodiment described in Item 2-45, it is preferable that the correction of the tones and/or colors is correction for emphasizing contrast of images.

Further, in the embodiment described in any one of Items 2-41 through 2-44 as in the embodiment described in Item 2-46, it is preferable that the correction of the tones and/or colors is correction for emphasizing chroma of images.

To solve the problems stated above, in the embodiment described in Item 2-47, there are realized, in the computer conducting image processing, the functions to conduct image transform based on a color appearance model on the inputted scene-referred raw data, then, to conduct correction of tones and/or colors based on the parameter for color gamut mapping related to the scene-referred raw data simultaneously with color gamut mapping processing corresponding to output equipment after the image transform, and to conduct an inverse transform of the image transform after the color gamut mapping processing, for outputting.

To solve the problems stated above, in the embodiment described in Item 2-48, there are realized functions wherein image transform based on a color appearance model is conducted on the inputted scene-referred raw data, then, after the image transform, correction of tones and/or colors based on the parameter for color gamut mapping specified from additional information of the scene-referred raw data is conducted simultaneously with color gamut mapping processing corresponding to output equipment, and an inverse transform of the image transform is conducted after the color gamut mapping processing, for outputting.

To solve the problems stated above, in the embodiment described in Item 2-49, there are realized functions wherein image transform based on a color appearance model is conducted on the inputted scene-referred raw data, then, after the image transform, correction of tones and/or colors based on the parameter for color gamut mapping specified from the scene-referred raw data is conducted simultaneously with color gamut mapping processing corresponding to output equipment after the image transform, and an inverse transform of the image transform is conducted after the color gamut mapping processing, for outputting.

Further, in the embodiment described in any one of Items 2-47 through 2-49 as in the embodiment described in Item 2-50, it is preferable that the color gamut mapping processing includes processing for emphasizing contrast of images.

Further, in the embodiment described in any one of Items 2-47 through 2-49 as in the embodiment described in Item 2-51, it is preferable that the color gamut mapping processing includes processing for emphasizing chroma of images.

To solve the problems stated above, in the embodiment described in Item 2-52, there are realized, in the computer conducting image processing, the functions to conduct image transform based on a color appearance model on the inputted scene-referred raw data, then, to conduct color gamut mapping processing corresponding to output equipment after the image transform, then, to conduct correction of tones and/or colors after the color gamut mapping processing and to conduct an inverse transform of the image transform after the correction, for outputting.

Further, in the embodiment described in Item 2-52 as in the embodiment described in Item 2-53, it is preferable that the function to conduct correction of the tones and/or colors based on the parameter for correction related to the scene-referred raw data is further realized on the computer.

Further, in the embodiment described in Item 2-52 as in the embodiment described in Item 2-54, it is preferable that the function to specify the parameter for correction from additional information of the scene-referred raw data and to conduct correction of the tones and/or colors based on the specified parameter for correction is further realized in the computer.

Further, in the embodiment described in Item 2-52 as in the embodiment described in Item 2-55, it is preferable that the function to specify the parameter for correction from the scene-referred raw data and to conduct correction of the tones and/or colors based on the parameter for correction is further realized in the computer.

Further, in the embodiment described in any one of Items 2-52 through 2-55 as in the embodiment described in Item 2-56, it is preferable that the correction of the tones and/or colors is correction for emphasizing contrast of images.

Further, in the embodiment described in any one of Items 2-52 through 2-55 as in the embodiment described in Item 2-57, it is preferable that the correction of the tones and/or colors is correction for emphasizing chroma of images.

Further, in the embodiment described in any one of Items 2-41 through 2-57 as in the embodiment described in Item 2-58, it is preferable that the color appearance model is CIECAM97s.

Further, in the embodiment described in any one of Items 2-41 through 2-57 as in the embodiment described in Item 2-59, it is preferable that the color appearance model is CIECAM02.

Further, in the embodiment described in any one of Items 2-43, 2-48 and 2-54 as in the embodiment described in Item 2-60, it is preferable that the additional information of the scene-referred raw data is information included in Exif file format.

In this case, the scene-referred raw data described in the aforesaid items means image data belonging to scene-referred raw state and data which can be transformed to image data belonging to scene-referred raw state.

The image state is a technical term which has assimilated recently as a concept showing "rendering state of image data" (detailed definitions of that technical term are shown in, for example, "Requirements for Unambiguous Specification of a Color Encoding ISO 22028-1", Kevin Spaulding, in Proc. Tenth Color Imaging Conference: Color Science and Engineering Systems, Technologies, Applications, IS&T, Springfield, VA, p. 106 -111 (2002)).

"Scene-referred" means data correlated with characteristics of an actual photographed scene taken by a photographing device such as a digital camera, and it means data which are transformed into color space defined colorimetrically and are proportional to luminance of a scene. Further, data which are not proportional to luminance, and are neither corrected nor emphasized intentionally, and can be transformed in terms of luminance and chromaticity value of the scene by the transform that can be expressed by a simple numerical formula, are included in the scene-referred. For example, raw data used generally by a digital camera can be transformed into a colorimetric value of the scene by a matrix operation expressing characteristics of an image sensor, and therefore, the raw data are included in the scene-referred.

Namely, the scene-referred raw data described in the aforementioned structure are specifically those including the raw data by the digital camera and those wherein the aforesaid raw data are transformed into color space whose transform method is defined colorimetrically, and the image data which have not been subjected to intentional correction and emphasizing correspond to the scene-referred raw data. With respect to the relationship between a luminance value of a pixel and luminance of the scene, it is not limited to a primary linear relationship, and OECF (photoelectric conversion characteristics defined by ISO14524) and contrast transform characteristics have only to be known.

In the invention, when outputting the inputted scene-referred raw data on an outputting device, 1) image transform based on a color appearance model is conducted for the scene-referred raw data, then, after the image transform, correction of tones and/or colors is conducted, then, after the correction, color gamut mapping processing corresponding to output equipment is conducted, and an inverse transform of the image transform is conducted after the color gamut mapping processing, to output, or 2) image transform based on a color appearance model is conducted for the scene-referred raw data, then, after the image transform, color gamut mapping processing corresponding to output equipment is conducted, then, correction of tones and/or colors is conducted, after or simultaneously with the color gamut mapping processing corresponding, and an inverse transform of the image transform is conducted after the color gamut mapping processing, to output, or 3) image transform based on a color appearance model is conducted for the scene-referred raw data, then, after the image transform, color gamut mapping processing corresponding to output equipment is conducted, then, correction of tones and/or colors is conducted, after the color gamut mapping processing corresponding, and an inverse transform of the image transform is conducted after the correction, to output, thereby, image transform based on a color appearance model and correction of tones and/or colors can be conducted together. Therefore, even when image data having luminance that is proportional to that of the photographed scene such as scene-referred raw data are inputted, appropriate image data for outputting can be prepared constantly.

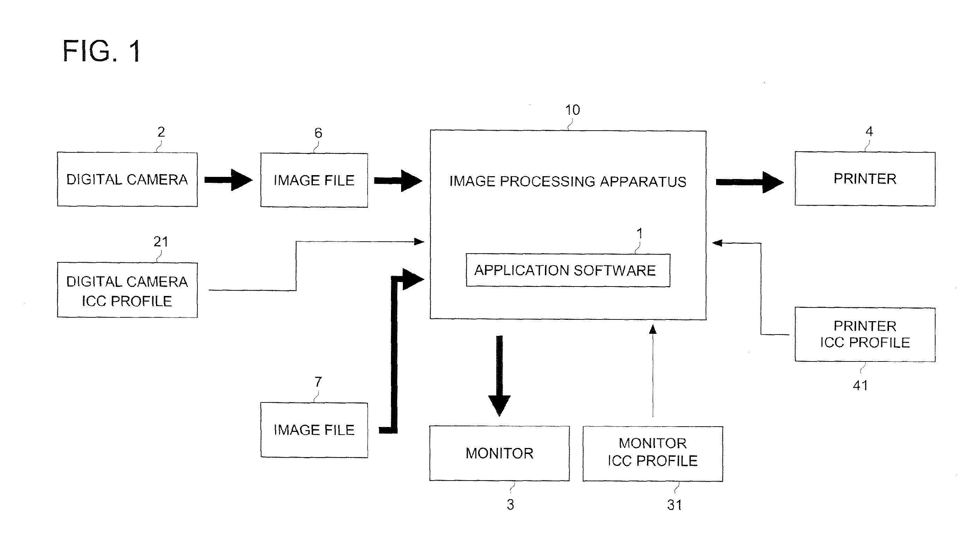

First, connection relationship between image processing apparatus 10 and various types of equipment in the present embodiment will be explained as follows, referring to Fig. 1.

As shown in Fig. 1, digital camera 2, monitor 2 such as CRT and printer 4 are connected to the image processing apparatus 10.

The image processing apparatus 10 has application software 1 representing a program for conducting image processing for various types of image files inputted. The digital camera 2 outputs image file 6 to which the data to be used in combination with the application software 1 is related. The application software 1 reads image file 6 to process it, and outputs to monitor 3 or printer 4. The application software 1 is also possible to process image file 7 taken by ordinary digital camera other than the digital camera 2. Digital camera ICC profile 21, monitor ICC profile 31 and printer ICC profile 41 each having thereon described characteristics are prepared respectively on digital camera 2, monitor 3 and printer 4.

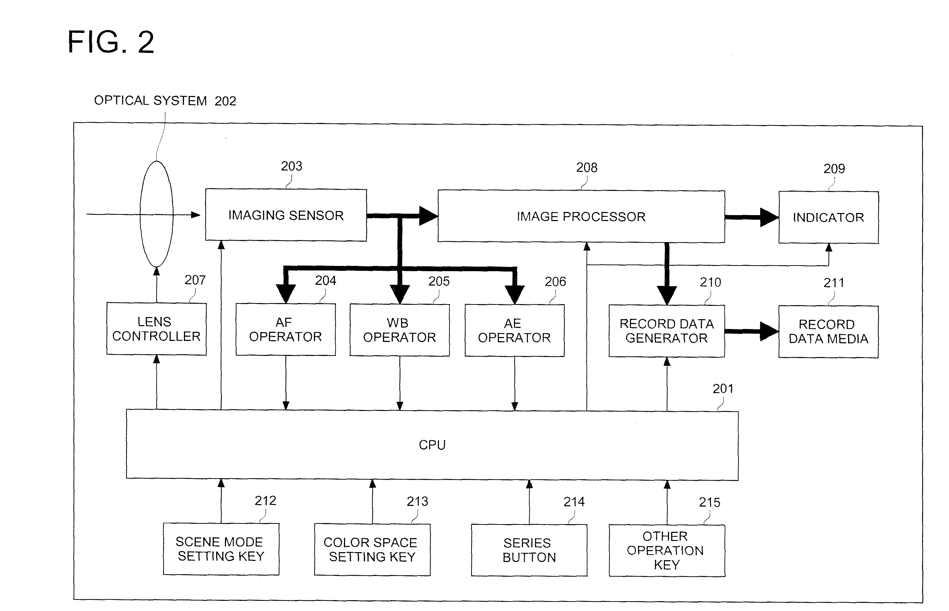

Next, an internal structure of the digital camera 2 will be explained as follows, referring to Fig. 2.

CPU 201 controls operations of the digital camera 2 collectively. Optical system 202 is a zoom lens which forms an image of a subject on CCD image sensor on imaging sensor 203. The imaging sensor 203 transforms an optical image photoelectrically with CCD and conducts analogue-to-digital conversion to output. The image data thus outputted are inputted respectively in AF operation section 204, WB operation section 205, AE operation section 206 and in image processing section 208. The AF operation section 204 obtains distances between AF areas arranged at 9 locations on an image area, and outputs them. Judgment of the distance is conducted by judgment of contrast of images. CPU 201 selects the value that is located at the nearest position to make it to be a subject distance. The WB operation section 205 outputs a white balance evaluation value of the image. The white balance evaluation value is a gain value necessary to make RGB output values of a neutral subject to agree under the light source in the case of photographing, and it is calculated as a ratio of R/G and a ratio of B/G with G channel serving as a standard. The evaluation value thus calculated is inputted in image processing section 208, and a white balance of the image is adjusted. The AE operation section 206 obtains an appropriate exposure value from image data and outputs it. The CPU 201 calculates an aperture value and a shutter speed value which make the calculated appropriate exposure value and the existing exposure value to agree with each other. The aperture value is outputted by lens control section 207, and the aperture diameter corresponding to the aperture value is established. The shutter speed value is outputted to imaging sensor section 203, and CCD integral time corresponding thereto is established. Image processing section 208 conducts series of image processing such as white balance processing, interpolation processing of CCD filter arrangement, color transform, contrast transform, sharpness correction and JPEG compression. JPEG-compressed image data are outputted to display section 209 and recording data preparing section 210. The display section 209 displays picked-up images on a liquid crystal display and displays various types of information by instruction of CPU 201. The recording data preparing section 210 formats JPEG-compressed image data and various types of photographed data inputted from CPU 201 on Exif file to record them on recording medium 211.

On the digital camera 2, a user can switch a photographing scene mode through its establishment. That is, three modes including an ordinary mode, a portrait mode and a scenery mode can be selected as the photographing scene mode, and a user can switch to a portrait mode when a subject is a person, and to a scenery mode when a subject is a scenery, by operating scene mode setting key 212, and thereby, to obtain an appropriate image for each subject. In addition, the digital camera 2 adds or relates information of the selected photographing scene mode to image data file for recording. Image data are recorded in a JPEG form of Exif file format which is a standard for a digital camera, and in that format, there exists a portion called a maker note (tag information area) representing a space where each maker can write in free information, and the photographing scene mode information is recorded on that space as meta information. Incidentally, it is also possible to compose a digital camera that judges a photographing scene automatically and switches a photographing scene mode (for example, see TOKKAI No. 2003-18433).

Further, the digital camera 2 records information of a position of AF area selected as a subject and information of CCD size on the image file in the same way.

Furthermore, on the digital camera 2, a user can set output color space through color space setting key 213. As the output color space, any one of scRGB representing scene-referred color space, sRGB representing output-referred color space and Raw can be selected. When sRGB is selected, an image transformed into sRGB color space where various types of image processing are conducted in the camera is outputted, in the same way as in the conventional digital camera. This processing is the same as that for a conventional digital camera. When scRGB color space is selected, transform is conducted based on IEC standard (IEC61966-2-2), for outputting. When Raw is selected, the color space peculiar to CCD is used for outputting.

Incidentally, in application software 1, photographing modes stated above can be switched, and a combination of any of a digital camera that records an ordinary Exif information or a digital camera that records only image data and does not record additional information, can be used, in addition to a digital camera records the information on image data to output it.

Next the functions of the application software 1 will be explained as follows, referring to Fig. 3.

The application software 1 is composed of CAM forward transform module 101 by a color appearance model, scene analysis module 102, photographing data analysis module 103, image correcting module 104, gamut mapping module 105 and CAM inverse transform module 106 by a color appearance model. Furthermore, image correcting module 104 and gamut mapping module 105 can be included in image processing module 107. Namely, the application software 1 is characterized in that the scene analysis module 102, photographing data analysis module 103 and image correcting module 104 are added to conventional application software 1a shown in Fig. 17. In this case, the image correcting module 104 conducts correction of tones and/or colors of images (emphasizing contrast, emphasizing chroma).

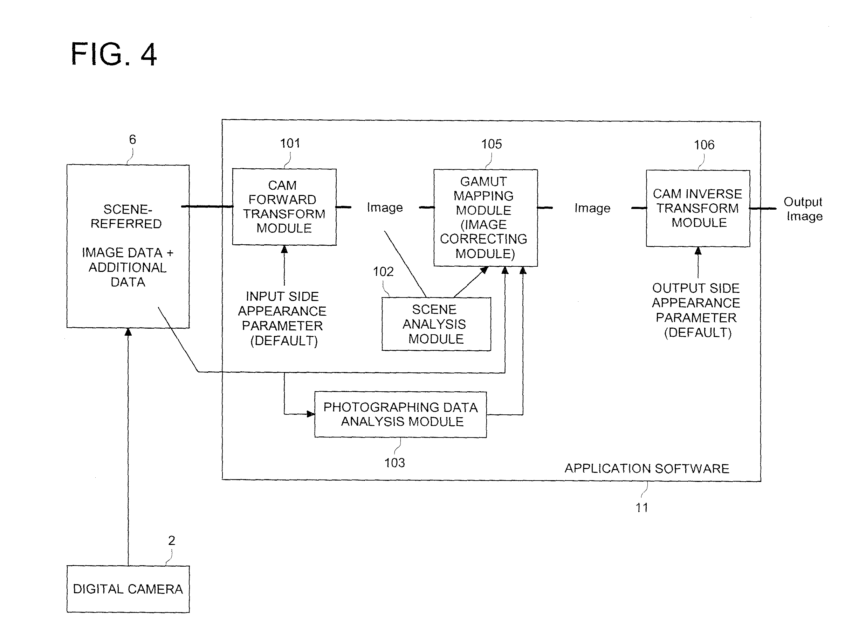

Incidentally, it is also possible to compose so that correction of tones and/or colors is conducted with gamut mapping module 105, as in application software 11 shown in Fig. 4. In this case, image correcting module 104 and gamut mapping module 105 in application software 1 are united to be one module as gamut mapping module 105 in the application software 11. The united module of the application software 11 can be called image processing module. The united module of the application software 11 transforms contrast and chroma in the same way as in the image transform module 104 in application software 1, before chroma compression processing for gamut mapping.

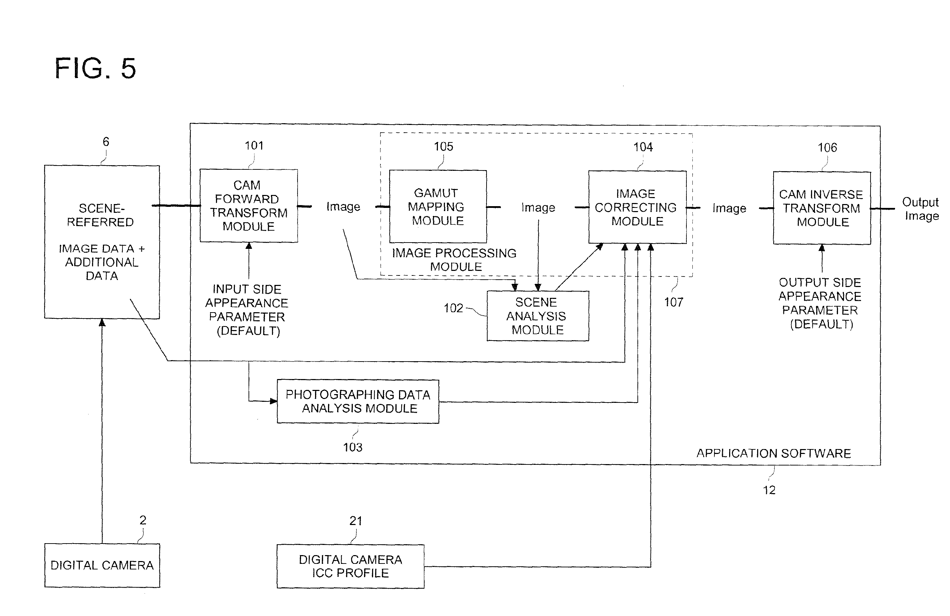

Further, it is also possible to compose so that correction of tones and/or colors is conducted after gamut mapping processing by gamut mapping module 105 as in application software 12 shown in Fig. 5. Image correcting module 104 and gamut mapping module 105 can be included in image processing module 107. In this case, image correcting module 104 is provided on the rear step of gamut mapping module 105. That is, the application software 1 and the application software 12 are the same in terms of contents of processing, and only difference between them is an order of processing.

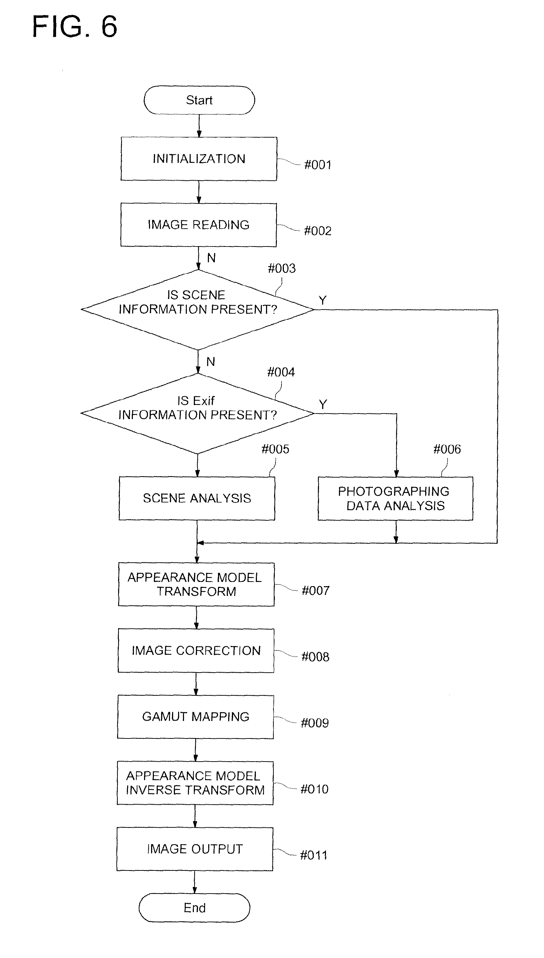

Next, contents of processing by application software 1 will be explained in detail as follows, referring to Fig. 6. The contents of processing explained here are conducted when an unillustrated CPU of image processing apparatus 10 carries out application software 1.

First, in step #001, there is conducted initialization such as resetting of a variable number and a flag to be used. In step #002, scene-referred raw data are read from digital camera 2 in accordance with an instruction of a user. Then, in step #003, whether photographing scene mode information of digital camera 2 is included in the scene-referred raw data or not is judged, and when the information is included (step #003, Yes), the flow moves to step #007, while when the information is not included (step #003, No), the flow moves to step #004. In step #004, whether Exif information is related to the scene-referred raw data or not is judged, and when the Exif information is related (step #004, Yes), the flow moves to step #006, and photographing scene is specified from Exif information by photographing data analysis module 103. When the Exif information is not related to the scene-referred raw data in the stage of step #004 (step #004, No), the flow moves to step #005, and the scene-referred raw data is analyzed by scene analysis module 102 to specify the photographing scene. In step #007, image data are CAM-forward-transformed by CAM forward transform module 101 in accordance with a color appearance model. Incidentally, this color appearance model is one for correcting a difference of viewing conditions between a monitor and a printer under the average office environment, and an appearance parameter used for CAM forward transform cannot be changed. Next, in step #008, the transformed image data are subjected to correction of tones and/or colors by image correcting module 104, and then, the flow moves to step #009 where gamut mapping processing is conducted by gamut mapping module 105. Here, step #008 and #009 can be included in one step where image processing is conducted by image processing module 107. Finally, in step #010, CAM inverse transform based on the color appearance model is conducted by CAM inverse transform module 106, and in step #011, output image (output-referred raw data) after the CAM inverse transform is outputted to an output device.

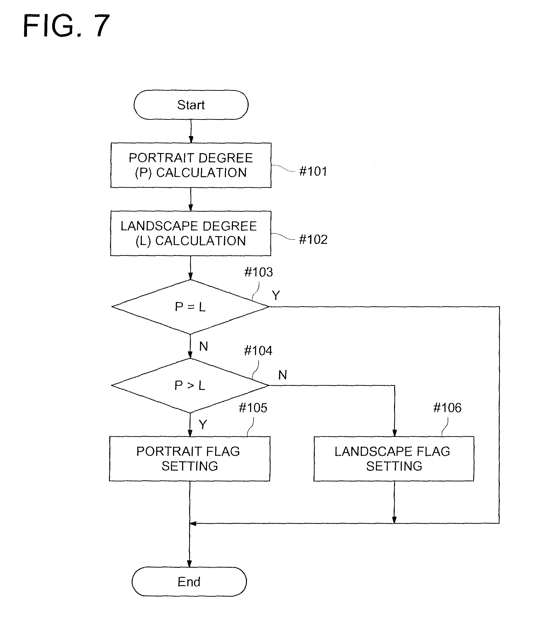

Referring to Fig. 7, contents of processing by the photographing data analysis module 103 will be explained in detail, next.

When the photographing data analysis module 103 is carried out, a photographing scene is specified by using information such as luminance, a focal length of a lens and a photographing distance all recorded as Exif information.

First, portrait rate P is calculated in step #101, first. In this case, the portrait rate is calculated based on a membership function shown in Figs. 8(a) - 8(c), by the use of information about luminance Bv and focal length f' both recorded in Exif information and of information about image magnification $\beta$ (= f'/D) which is calculated from a focal length of the lens and photographing distance D. The membership function is one showing a rate (probability) of a portrait scene to a focal length of a lens, and it can be considered to be one showing frequency in use in the scene to be judged. Portrait rate for luminance $P_{Bv}$ is found from Xa graph in Fig. 8(a), portrait rate for a focal length $P_{f}$, is found from Xa Fig. 8(b), and portrait rate for an image magnification $P_{\beta}$ is found Fig. 8(c), and P is calculated from the following expression.

(Numeral 1)

$$P = P_{Bv} \times P_{f'} \times P_{\beta}$$

In step #102, scenery rate L is calculated equally.

(Numeral 2)

$$L = L_{Bv} \times L_{f'} \times L_{\beta}$$

Next, in step #103, P and L are judged whether both of them are the same each other or not, and when they are the same each other (step #3; Yes), the then processing is ended, while, when they are different each other (step #3; No), the flow moves to step #104, and P is judged whether it is larger than L. When P is larger than L (step #4; Yes), the flow moves to step #105, and a flag of a person is set and the then processing is ended. When P is not larger than L (step #4; No), the flow moves to step #106, and a flag of a scenery is set and the then processing is ended.

Referring to Fig. 9, CAM forward transform processing based on a color appearance model by CAM forward transform module 101 will be explained in detail, next. In the present embodiment, an example wherein CIECAM97s was used as a color appearance model will be explained, first.

Those necessary as input data to the appearance model are the following data.

· Tristimulus values X, Y and Z of a color whose appearance needs to be estimated
· Viewing condition parameter concerning input image
　　Tristimulus values Xw, Yw and Zw of a white color in an adapting field area
　　Average luminance of an adapting field area LA
　　Relative luminance of a background area Yb
　　Constants determined by conditions of peripheral areas c, Nc, $F_{LL}$ and F

In step #201, RGB values of each pixel of input image data are transformed into tristimulus values X, Y and Z.

(Numeral 3)

$$\begin{pmatrix} R' \\ G' \\ B' \end{pmatrix} = \begin{pmatrix} (R \div 8192.0) - 0.5 \\ (G \div 8192.0) - 0.5 \\ (B \div 8192.0) - 0.5 \end{pmatrix}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

In the case of sRGB, the following expressions are used.

(Numeral 4)

$$R_{sRGB} = R/255$$

$$G_{sRGB} = G/255$$

$$B_{sRGB} = B/255$$

$$\text{if } R_{sRGB}, G_{sRGB}, B_{sRGB} \leq 0.04045$$

$$R' = R_{sRGB} / 12.92$$

$$G' = G_{sRGB} / 12.92$$

$$B' = B_{sRGB} / 12.92$$

otherwise

$$R' = [(R_{sRGB} + 0.055) / 1.055]^{2.4}$$

$$G' = [(G_{sRGB} + 0.055) / 1.055]^{2.4}$$

$$B' = [(B_{sRGB} + 0.055) / 1.055]^{2.4}$$

$$\begin{pmatrix} X \\ Y \\ Z \end{pmatrix} = \begin{pmatrix} 0.4124 & 0.3576 & 0.1805 \\ 0.2126 & 0.7152 & 0.0722 \\ 0.0193 & 0.1192 & 0.9505 \end{pmatrix} \begin{pmatrix} R' \\ G' \\ B' \end{pmatrix}$$

Further, in the case of Raw data, they are transformed by the use of digital camera ICC profile 21 in which characteristics of digital camera 2 are described. To be concrete, transform identical to the foregoing is carried out by the use of 3 x 3 matrix information described in the digital camera ICC profile 21.

Next, in step #202, the following values used in the calculation later are calculated from the established appearance parameter.

(Numeral 5)

$$k = \frac{1}{5 \cdot L_A + 1}$$

$$F_L = 0.2 \cdot k^4 \cdot (5 \cdot L_A) + 0.1 \cdot (1 \cdot k^4)^2 \cdot (5 \cdot L_A)^{\frac{1}{3}}$$

$$n = \frac{Yb}{Yw}$$

$$N_{bb} = N_{cb} = 0.725 \cdot \left(\frac{1}{n}\right)^{0.2}$$

$$z = 1 + F_{LL} \cdot n^{1/2}$$

Next, in step #203, chromatic adaptation transform is carried out for image data. The chromatic adaptation transform is one wherein chromatic adaptation transform of a von Kries-type has been improved and a degree of adaptation for a white color under the viewing condition is considered. First, X, Y and Z are transformed into

(Numeral 6)

$$\bar{R}, \bar{G}, \bar{B}$$

by the following expressions (hereinafter referred to as R1, G1 and B1 respectively in the text).

(Numeral 7)

$$\begin{pmatrix} \bar{R} \\ \bar{G} \\ \bar{B} \end{pmatrix} = M_B \cdot \begin{pmatrix} X/Y \\ Y/Y \\ Z/Y \end{pmatrix}$$

In this case, the following is used as transform matrix $M_B$.

(Numeral 8)

$$M_B = \begin{pmatrix} 0.8951 & 0.2664 & -0.1614 \\ -0.7502 & 1.7135 & 0.0367 \\ 0.0389 & 0.0685 & 1.0296 \end{pmatrix}$$

Responses Rc, Gc and Bc which have been subjected to chromatic adaptation transform by the following expression are calculated from R1, G1 and B1 transformed in the aforesaid way.

(Numeral 9)

$$Rc = \left[ \frac{D}{Rw} + (1-D) \right] \cdot \bar{R}$$

$$Gc = \left[ \frac{D}{Gw} + (1-D) \right] \cdot \bar{G}$$

$$Bc = \left[ \frac{D}{Bw^P} + (1-D) \right] \cdot \left| \bar{B} \right|^P$$

$$\mathrm{p} = \mathrm{BW}^{0.0834}$$

$$D = F - F \Big/ \left[ 1 + 2(L_A^{1/4}) + (L_A^2)/300 \right]$$

In the expressions above, Rw, Gw and Bw are those wherein tristimulus values of adaptation white color are transformed by matrix $M_B$.

Subsequently, in step #204, image data which have been subjected to chromatic adaptation processing are transformed into cone responses R', G' and B' which correspond to human visual system sensors. First, inverse transform of the transform by the matrix stated above is carried out, and then, 3 x 3 matrix called as Hunt-Pointer-Estevez is applied.

(Numeral 10)

$$\begin{pmatrix} R' \\ G' \\ B' \end{pmatrix} = M_{HPE} \cdot M_B^{-1} \begin{pmatrix} Rc \cdot Y \\ Gc \cdot Y \\ Bc \cdot Y \end{pmatrix}$$

$$M_B^{-1} = \begin{pmatrix} 0.9870 & -0.1471 & 0.1600 \\ 0.4323 & 0.5184 & 0.0493 \\ -0.0085 & 0.0400 & 0.9685 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

Subsequently, in step #205, image data which have been transformed into cone responses are subjected to the following transform corresponding to non-linear response of a human visual system.

(Numeral 11)

$$Ra' = \frac{40 \cdot \left( F_L \cdot R' \middle/ 100 \right)^{0.73}}{\left[ \left( F_L \cdot R' \middle/ 100 \right)^{0.73} + 2 \right]} + 1$$

$$Ga' = \frac{40 \cdot \left( F_L \cdot G' \middle/ 100 \right)^{0.73}}{\left[ \left( F_L \cdot G' \middle/ 100 \right)^{0.73} + 2 \right]} + 1$$

$$Ba' = \frac{40 \cdot \left( F_L \cdot B' \middle/ 100 \right)^{0.73}}{\left[ \left( F_L \cdot B' \middle/ 100 \right)^{0.73} + 2 \right]} + 1$$

Finally, in step #206, numerical values estimating color appearance, hue angle: h, lightness: J and chroma: C are calculated respectively based on the following expressions.

(Numeral 12)

$$h = \tan^{-1}(b/a)$$

$$a = Ra' - 12 \cdot Ga'/11 + Ba'/11$$

$$b = (1/9) \cdot (Ra' + Ga' - 2 \cdot Ba')$$

$$J = 100 \cdot (A/Aw)^{c'\tau}$$

$$A = [2 \cdot Ra' + Ga' + (1/20) \cdot Ba' - 0.305] \cdot N_{hb}$$

(Aw is calculated from Ra', Ga' and Ba' which are obtained by transforming Xw, Yw and Zw in the same way)

$$C = 2.44 \cdot s^{0.69} (J/100)^{0.67n}(1.64 - 0.29^{n})$$

$$s = \frac{50 \cdot (a^2 + b^2)^{\frac{1}{2}}100 \cdot e \cdot (10/13)Nc \cdot Ncb}{Ra' + Ga' + (21/20) \cdot Ba'}$$

$$e = e_1 + (e_2 - e_1)(h - h_1)/(h_2 - h_1)$$

With respect to h1, h2, e1 and e2, they are retrieved from the following table. In the case of $h < h_1$, h' is made to be h + 360, and in other cases, h' is made to be h, then, i satisfying $hi \leq h' < h_{i+1}$ is obtained, and is used as $h_1 = h_i$, $h_2 = h_{i+1}$, $e_1 = e_i$ and $e_2 = e_{i+1}$.

Table 1

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $H_i$ | 0.0 | 100.0 | 200.0 | 300.0 | 400.0 |

When CIECAM02 is used as a color appearance model, processing in step #202 and thereafter are changed as follow.

Namely, in step #202, the following values used in calculation later are calculated from the established appearance parameter.

(Numeral 13)

$$k = \frac{1}{5 \cdot L_A + 1}$$

$$F_L = 0.2 \cdot k^4 \cdot (5 \cdot L_A) + 0.1 \cdot (1 - k^4)^2 \cdot (5 \cdot L_A)^{\frac{1}{3}}$$

$$n = \frac{Yb}{Yw}$$

$$N_{bb} = N_{cb} = 0.725 \cdot \left(\frac{1}{n}\right)^{0.2}$$

$$z = 1.48 + \sqrt{n}$$

Subsequently, in step #203, chromatic adaptation transform is conducted for image data. The chromatic adaptation transform is one wherein chromatic adaptation transform of a von Kries-type has been improved and a degree of adaptation for a white color under the viewing condition is considered. First, X, Y and Z are transformed by the following expressions into R1, G1 and B1 respectively.

(Numeral 14)

$$\begin{pmatrix} \overline{R} \\ \overline{G} \\ \overline{B} \end{pmatrix} = M_{CAT02} \cdot \begin{pmatrix} X \\ Y \\ Z \end{pmatrix}$$

Here, the following expression is used as transform matrix $M_{CAT02}$.

(Numeral 15)

$$M_{CAT02} = \begin{pmatrix} 0.7328 & 0.4296 & -0.1624 \\ -0.7036 & 1.6975 & 0.0061 \\ 0.0030 & 0.0136 & 0.9834 \end{pmatrix}$$

Responses Rc, Gc and Bc which have been subjected to chromatic adaptation transform by the following expression are calculated from R1, G1 and B1 transformed in the aforesaid way.

(Numeral 16)

$$Rc = \left[ Yw \cdot \frac{D}{Rw} + (1-D) \right] \cdot \overline{R}$$

$$Gc = \left[ Yw \cdot \frac{D}{Gw} + (1-D) \right] \cdot \overline{G}$$

$$Bc = \left[ Yw \cdot \frac{D}{Bw} + (1-D) \right] \cdot \overline{B}$$

$$D = F \left[ 1 - \left( \frac{1}{3.6} \right) e^{\frac{-L_A - 42}{92}} \right]$$

(e represents a base of natural logarithm)
Here, Rw, Gw and Bw are those wherein tristimulus values of adaptation white color are transformed by matrix $M_{CAT02}$.
Next, in step #204, image data which have been subjected to chromatic adaptation processing are transformed into cone responses R', G' and B' which correspond to human visual system sensors. First, inverse transform of the transform by the matrix stated above is carried out, and then, 3 x 3 matrix called as Hunt-Pointer-Estevez is applied.

(Numeral 17)

$$\begin{pmatrix} R' \\ G' \\ B' \end{pmatrix} = M_{HPE} \cdot M_{CAT02}^{-1} \begin{pmatrix} Rc \\ Gc \\ Bc \end{pmatrix}$$

$$M_{CAT02}^{-1} = \begin{pmatrix} 1.096124 & -0.278869 & 0.182745 \\ 0.454369 & 0.473533 & 0.072098 \\ -0.009268 & -0.005698 & 1.015326 \end{pmatrix}$$

$$M_{HPE} = \begin{pmatrix} 0.38971 & 0.68898 & -0.07868 \\ -0.22981 & 1.18340 & 0.04641 \\ 0 & 0 & 1 \end{pmatrix}$$

Next, in step #205, image data which have been transformed into cone responses are subjected to the following transform corresponding to non-linear response of a human visual system.

(Numeral 18)

$$Ra' = \frac{400 \cdot \left( F_L \cdot R'/100 \right)^{0.42}}{27.13 + \left( F_L \cdot R'/100 \right)^{0.42}} + 0.1$$

$$Ga' = \frac{400 \cdot \left( F_L \cdot G'/100 \right)^{0.42}}{27.13 + \left( F_L \cdot G'/100 \right)^{0.42}} + 0.1$$

$$Ba' = \frac{400 \cdot \left( F_L \cdot B'/100 \right)^{0.42}}{27.13 + \left( F_L \cdot B'/100 \right)^{0.42}} + 0.1$$

Finally, in step #206, numerical values estimating color appearance, hue angle: h, lightness: J and chroma: C are calculated respectively based on the following expressions.

(Numeral 19)

$$h = \tan^{-1}\left( b \middle/ a \right)$$

$$a = Ra' - 12 \cdot Ga' \middle/ 11 + Ba' \middle/ 11$$

$$b = \left( 1 \middle/ 9 \right) \cdot \left( Ra' + Ga' - 2 \cdot Ba' \right)$$

$$J = 100 \cdot \left( A \middle/ Aw \right)^{cz}$$

$$A = [2 \cdot Ra' + Ga' + (1/20) \cdot Ba' - 0.305] \cdot N_{bb}$$

(Aw is calculated from Ra', Ga' and Ba' which are obtained by transforming Xw, Yw and Zw in the same way)

$$C = t^{0.9} \cdot \sqrt{ J \middle/ 100 } \cdot (1.64 - 0.29^n)^{0.73}$$

$$t = \frac{e_1 \cdot (a^2 + b^2)^{1/2}}{Ra' + Ga' + (21/20) \cdot Ba'}$$

$$e_1 = \left( \frac{12500}{13} \cdot Nc \cdot Ncb \right) \cdot \left[ \cos\left( h \cdot \frac{\pi}{180} + 2 \right) + 3.8 \right]$$

Through the transform mentioned above, RGB values result in values of J, C and h showing "color appearance".

Referring to Fig. 10, contents of processing by scene analysis module 102 will be explained in detail, next.

The scene analysis module 102 analyzes images transformed by a color appearance model into visual "appearance" data, and thereby, judges whether or not the image data include a portion that is suited to a flesh color. This makes it possible to judge whether the image represents people photography or not. Further, by measuring its area, a size of a person is specified.

First, in step #301, a pixel counting value used for counting pixels is reset to zero. Then, in step #302, there is judged whether a value of each pixel transformed into L*a*b* belongs to a flesh color area established in advance or not, and when it belongs to the flesh color area (step #302; Yes), the flow moves to step #303 to add 1 to a flesh color pixel count value, and then, moves to step #304. When the value of each pixel does not belong to the flesh color area (step #302; No), the flow moves to step #304. In the step #304, 1 is added to the aforesaid pixel count value, and in step #305, the pixel count value is compared with the total number of pixels to judge whether processing for all pixels has been terminated or not. When the processing for all pixels has not been terminated (step #305; No), the flow goes back to step #302 to repeat the treatments of the above-mentioned steps #302 - #305. When the processing for all pixels has been terminated (step #305; Yes), the flow moves to step #306 to judge whether the value of the rate of flesh color obtained by dividing the flesh color pixel count value with the total pixel count value is greater than threshold value TH or not, and when the value of the rate of flesh color is greater than TH (step #306; Yes), the flow moves to step #307 to set a flag of a person indicating that a subject is a person to end the then processing. When the value of the rate of flesh color is equal to or smaller than TH (step #306; No), the flow moves to step #308 to reset a flag of a person to end the then processing.

Subsequently, referring to Fig. 11, contents of processing by image correcting module 104 will be explained in detail.

First, in step #401, there is judged whether Exif information recorded by digital camera 2 is present or not. When the Exif information is present (step #401; Yes), the flow moves to step #402 to read a luminance value recorded from control Bv (parameter for correcting tone and/or color) and to set to luminance value $L_{BV}$. In this case, the luminance value stated above is recorded by control Bv value of APEX system used for exposure control of digital camera 2.

Incidentally, even when the luminance value is not recorded directly, if Tv value, Av value and Sv value representing APEX values of a shutter speed value, an aperture value and an ISO speed value are recorded, Bv values can be calculated by the following expression, thus, luminance value $L_{BV}$ may also be obtained from Bv value obtained by the aforesaid manner.

(Numeral 20)

$$Bv = Tv + Av - Sv$$

When the Exif information is not present (step #401; No), the flow moves to step #403 to assume that the photographed scene is an outdoor scene in day time that is generally the highest in terms of frequency, and to establish its average luminance value Bv = 9 (default value) to the luminance value $L_{BV}$.

In step #404, transform LUT (Look Up Table) for emphasizing contrast and an appearance correction coefficient for emphasizing chroma are established. In the CAM forward transform of a color appearance model (see step #007 shown in Fig. 6), what is assumed as a viewing condition is sRGB monitor placed in ordinary office environment. A luminance value of the sRGB monitor is 80 cd/m$^2$. On the image correcting module 104, there is established in advance transform LUT that emphasizes different contrast in accordance with a difference between luminance value of photographing scene $L_{BV}$ and the luminance value established as a standard condition (see Fig. 15).

The transform LUT is established as follows, depending on the value of the luminance value $L_{BV}$.

(Numeral 21)

| | Established LUT | f |
|---|---|---|
| $8 < L_{BV}$ | LUT4 | 1.2 |
| $7 < L \leq 8$ | LUT3 | 1.1 |
| $5 < L \leq 7$ | LUT2 | 1.05 |
| $L < 5$ | LUT1 | 1.0 |

Further, coefficient f for correcting a value of chroma is set to emphasize chroma.

Next, for conducting tone correction in accordance with photographing scene, there is judged whether a person subject flag is set or not in step #405, and when a person subject flag is set (step #405; Yes), the flow moves to step #406 to establish LUT for persons, while, when a person subject flag is not set (step #405; No), the flow moves to step #407 to establish LUT for ordinary use. Then, in step #408, LUT for correcting appearance and LUT for correcting scene are applied on lightness of image data: J to conduct tone transform, and further to correct chroma: C with coefficient f by the following expression, to terminate the then processing.

(Numeral 22)

$$C' = f \times C$$

Subsequently, referring to Figs. 12 and 13, contents of processing relating to gamut mapping module 105 will be explained in detail.

The most simple method as a gamut mapping method is a clipping method which maps chromaticity points which are present outside a color area capable of being recorded onto a boundary of nearest color areas. In this method, however, tone on the outside of the color area lacks detail, resulting in an image that gives a sense of discomfort in appreciation. The present example, therefore, employs non-linear compression wherein chromaticity points in the area where the chroma is higher than an appropriate threshold value are compressed smoothly depending on a size of chroma. Namely, in the area where chroma value is not less than threshold value: Cth, the compression shown in Fig. 12 is conducted by the use of chroma value: C calculated by the color appearance model (For details about a method of color area mapping, see, for example, page 447 of "Fine Imaging and Digital Photography" of Corona Co. edited by Publishing Committee of The Society of Photographic Science and Technology of Japan).

First, in step #501, respective colorimetric values $X_{in}$ (i), $Y_{in}$ (i) and $Z_{in}$ (i) are calculated (i = R, G, B, C, M and Y) for main six primary colors of R, G, B, C, M and Y in a color space on the input side. In other words, for 8 bit data, for example, values of R, G and B are calculated successively under the condition that 255, 0 and 0 are for R, and 0, 255 and 0 are for G. For the transform to a colorimetric value, the method explained in step #501 for transform by the color appearance model is used.

Further, in step #502, chroma values: Cin (i) (i = R, G, B, C, M and Y) are calculated from the calculated XYZ values, by the use of the color appearance model.

Next, in step #503, respective colorimetric values $X_{out}$(i), $Y_{out}$(i) and $Z_{out}$(i) are calculated (i = R, G, B, C, M and Y) for main six primary colors of R, G, B, C, M and Y in a color space of output device, in the same way. For transform into colorimetric values, monitor ICC profile 31 and printer ICC profile 41 are used as a parameter for gamut mapping (color area mapping). With respect to ordinary ICC profile, when a method of transform is described in a multidimensional look up table system, a gamut mapping table is prepared in the case of making a profile. In the present example, however, when preparing a profile, there is used an exclusive profile wherein there are written data which make is possible to judge without compression that output device is out of gamut.

Further, in step #504, chroma value: Cout (i) is calculated from the calculated XYZ values, in the same way as in step #502 (i = R, G, B, C, M and Y).

Next, in step #505, a value of k is calculated from the minimum value of Cout (i)/Cin (i) through the following expression. Further, a color for which the value of k has been calculated is stored in a memory such as RAM as mincolor.

(Numeral 23)

$$k = Min\left( {C_{out}(i)} \middle/ {C_{in}(i)} \right), i = R, G, B, C, M, Y$$

However, in the case of k > l, k is restricted to k = 1.

Next, in step #506, a counting value used for counting pixels is reset.

Next, in step #507, a value of chroma: C of each pixel transformed into JCh is transformed to value C' compressed by the following expression. Threshold value Cth at which the compression is started is made to be 80% of the value of k, which is calculated by the following expression.

(Numeral 24)

$$Cth = k \times 0.8$$

if $C < C_{th}$
C' = C
otherwise

$$C' = \frac{C_{out}(\text{min } color)}{[C_{in}(\text{min } color - Cth)]^{0.5}} \cdot (C - Cth)^{0.5}$$

Subsequently, in step #508, a pixel count value is compared with the total value of pixels to judge whether processing for all pixels has been terminated or not. When the processing for all pixels has been terminated (step #508; Yes), the then processing is terminated. When the processing for all pixels has not been terminated (step #508; No), the flow goes back to step #507 to repeat the treatments of the steps #507 and #508.

Incidentally, the gamut mapping method includes many methods in addition to one explained in the present specification, and many of them can be used.

Referring to the flow chart shown in Fig. 14, CAM inverse transform based on a color appearance model by CAM inverse transform module 106 will be explained in detail, next.

First, in step #601, the following variables are calculated from the second appearance parameters relating to output images Xw', Yw', Zw', $L_A$', Yb', c', Nc', $F_{LL}$' and F'.

(Numeral 25)

$$k' = \frac{1}{5 \cdot L_A' + 1}$$

$$F_L' = 0.2 \cdot k'^4 \cdot (5 \cdot L_A') + 0.1 \cdot (1 - k'^4)^2 \cdot (5 \cdot L_A')^{\frac{1}{3}}$$

$$n' = \frac{Yb'}{Yw'}$$

$$N_{bb}' = N_{cb}' = 0.725 \cdot \left(\frac{1}{n'}\right)^{0.2}$$

$$z' = 1 + F_{LL}' \cdot n'^{1/2}$$

Further, Aw' is calculated by applying operations in step #203 - #206 on Xw', Yw' and Zw'.

Subsequently, in step #602, non-linear response values Ra', Ga' and Ba' are calculated from parameters J', C' and h representing a color appearance. First, A and s are obtained by the following expression from J' and C'.

(Numeral 26)

$$A = Aw' \cdot (J'/100)^{1/c'z'}$$

$$s = C'^{1/069} / \left[2.44 \cdot (J'/100)^{0.67n'}(1.64 - 0.29^{n'})\right]^{1/0.69}$$

Next, a and b are obtained by the following expression.

(Numeral 27)

$$a = \frac{s \cdot (A/N_{bb}' + 2.05)}{\left\{[1 - \tan^2(h)]^{1/2}[50000 \cdot e \cdot Nc' \cdot Ncb'/13] + s[11/23 + (108/23) \cdot \tan(h)]\right\}}$$

$$b = a \cdot \tan(h)$$

Here, in the calculation of $[1 + \tan^2(h)]^{1/2}$, the signs of the results are as follows depending on the value of h.

$$0 \leq h < 90 \qquad [1 + \tan^2(h)]^{1/2}$$

$$90 \leq h < 270 \qquad -[1 + \tan^2(h)]^{1/2}$$

$$270 \leq h < 360 \qquad [1 + \tan^2(h)]^{1/2}$$

further,

$$e = e_1 + (e_2 - e_1)(h - h_1)/(h2 - h_1)$$

With respect to h1, h2, e1 and e2, they are retrieved from the following table. In the case of $h < h_1$, h' is made to be h + 360, and in other cases, h' is made to be h, then, i satisfying $hi \leq h' < h_{i+1}$ is obtained, and is used as $h_1 = h_i$, $h_2 = h_{i+1}$, $e_1 = e_i$ and $e_2 = e_{i+1}$.

Table 2

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |

Ra', Ga' and Ba' are calculated from the following expressions.

(Numeral 28)

$$Ra' = (20/61) \cdot (A/N_{bb}' + 2.05) + (41/61) \cdot (11/23) \cdot a +$$

$$(288/61) \cdot (1/23) \cdot b$$

$$Ga' = (20/61) \cdot (A/N_{bb}' + 2.05) - (81/61) \cdot (11/23) \cdot a -$$

$$(261/61) \cdot (1/23) \cdot b$$

$$Ba' = (20/61) \cdot (A/N_{bb}' + 2.05) - (20/61) \cdot (11/23) \cdot a -$$

$$(20/61) \cdot (315/23) \cdot b$$

Next, in step #603, non-linear response values Ra', Ga' and Ba' are subjected to inverse transform, to obtain cone responses R', G' and B'.

(Numeral 29)

$$R' = 100 \cdot [(2 \cdot Ra' - 2) / (41 - Ra')]^{1/0.73}$$

$$G' = 100 \cdot [(2 \cdot Ga' - 2) / (41 - Ga')]^{1/0.73}$$

$$B' = 100 \cdot [(2 \cdot Ba' - 2) / (41 - Ba')]^{1/0.73}$$

Here, in the case of Ra' - 1 < 0, the following expression is used. The same is true also for Ga' and Ba'.

(Numeral 30)

$$R' = -100 \cdot [(2 - 2 \cdot Ra') / (39 - Ra')]^{1/0.73}$$

Further, in step #604, cone responses are subjected to inverse transform, and Rc·Y, Gc·Y and Bc·Y (hereinafter referred to simply as RcY, GcY and BcY) are calculated.

(Numeral 31)

$$\begin{pmatrix} RcY \\ GcY \\ BcY \end{pmatrix} = M_B \cdot M_{HPE}^{-1} \begin{pmatrix} R' \\ G' \\ B' \end{pmatrix}$$

$$M_{HPE} = \begin{pmatrix} 1.91019 & -1.11214 & 0.20195 \\ 0.37095 & 0.62905 & 0 \\ 0 & 0 & 1 \end{pmatrix}$$

Next, in step #605, chromatic adaptation inverse transform is carried out to return to colorimetric values. The following expression is used to calculate Yc, first.

(Numeral 32)

$$Yc = 0.43231 \cdot RcY + 0.51836 \cdot GcY + 0.04929 \cdot BcY$$

Then, the following expression is used to calculate (Y/Yc) R, (Y/Yc)G and $(Y/Yc)^{1/P}B$.

(Numeral 33)

$$(Y/Yc)R = (Y/Yc)Rc/[D(1/Rw) + 1 - D]$$

$$(Y/Yc)G = (Y/Yc)Gc / [D(1/Gw) + 1 - D]$$

$$(Y/Yc)^{1/P}B = [|\,(Y/Yc)\,Bc|]^{1/P} / [D(1/Bw^P) + 1 - D]^{1/P}$$

Here, in the case of (Y/Yc) < 0, a value of $(Y/Yc)^{1/P}B$ is made to be negative.
Then, Y' is calculated by the following expression.

(Numeral 34)

$$Y' = 0.43231 \cdot YR + 0.51836 \cdot YG + 0.04929 \cdot (Y/Yc)^{1/P}BYc$$

Here, tristimulus values X", Y" and Z" are calculated by the following expression.

(Numeral 35)

$$\begin{pmatrix} X" \\ Y" \\ Z" \end{pmatrix} = M^{-1} \begin{pmatrix} Yc(Y/Yc)R \\ Yc(Y/Yc)G \\ Yc(Y/Yc)^{1/p}B/Yc(Y'/Yc)^{(1/p-1)} \end{pmatrix}$$

Through the foregoing, tristimulus values X", Y" and Z" of the colors corresponding to the appearance specified in the environment are calculated from the value indicating the color appearance and from the second viewing environment parameters.
This value is outputted after being transformed into color space of an output equipment, in step #606. Specifically, 3 x 3 matrix information described in monitor ICC profile 31 and printer ICC profile 41 in which the characteristics of the monitor 3 and printer 4 are respectively described is used, or the three-dimensional look up table is used, to transform.

Further, the contents of processing shown below are for the CAM inverse transform in the case of using CIECAM02 as a color appearance model.

First, in step #601, the following variables are calculated from the second appearance parameter.

(Numeral 36)

$$k' = \frac{1}{5 \cdot L_A'+1}$$

$$F_L' = 0.2 \cdot k^4 \cdot (5 \cdot L_A') + 0.1 \cdot (1 \cdot k^4)^2 \cdot (5 \cdot L_A')^{\frac{1}{3}}$$

$$n' = \frac{Yb'}{Yw'}$$

$$N_{bb}' = N_{cb}' = 0.725 \cdot \left(\frac{1}{n'}\right)^{0.2}$$

$$z' = 1.48 + \sqrt{n'}$$

Further, operations of steps #203 - #206 relating to the CAM transform stated above are applied by using the second appearance parameter, for tristimulus values of a white color in the adapting field area, for calculating Aw'.

Next, non-linear response calculation from the color appearance value will be explained (step #602). First, the input value of hue angle h is retrieved from the following table, to obtain i that satisfies $h_i \leq h' < h_{i+1}$.

Table 3

| i | 1 | 2 | 3 | 4 | 5 |
|---|---|---|---|---|---|
| $h_i$ | 20.14 | 90.00 | 164.25 | 237.53 | 380.14 |
| $e_i$ | 0.8 | 0.7 | 1.0 | 1.2 | 0.8 |
| $H_i$ | 0.0 | 100.0 | 200.0 | 300.0 | 400.0 |

The aforesaid i and the input value of the hue component H of the color appearance are used to calculate the following expression.

(Numeral 37)

$$h' = \frac{(H - H_i)(e_{i+1} \cdot h_i - e_i \cdot h_{i+1}) - 100 \cdot h_i \cdot e_{i+1}}{(H - H_i)(e_{i+1} - e_i) - 100 \cdot e_{i+1}}$$

In the case of h' > 360 in this case, the value is one wherein 360 is subtracted.

Next, C' representing chroma of a color appearance and an input value of J' representing lightness are used to calculate the following variables.

(Numeral 38)

$$t = \left( \frac{C'}{\sqrt{J'/100}\,(1.64 - 0.29^{n'})^{0.73}} \right)^{\frac{1}{0.9}}$$

$$e = \left( \frac{12500}{13} \cdot Nc' \cdot Ncb' \right) \left( \cos\left( h'\frac{\pi}{180} + 2 \right) + 3.8 \right)$$

$$A = Aw' \left( J'/100 \right)^{\frac{1}{c' \cdot z'}}$$

$$p_1 = e/t$$

$$p_2 = \left( A/Nbb' \right) + 0.305$$

$$p_3 = 21/20$$

$$h_r = h'\frac{\pi}{180}$$

Next, when

(Numeral 39)

$$|\sin(h_r)| \geq |\cos(h_r)|$$

is satisfied, the following expressions are calculated.

(Numeral 40)

$$p_4 = p_1/\sin(h_r)$$

$$b = \frac{p_2(2 + p_3)\left( 460/1403 \right)}{p_4 + (2 + p_3)\left( 220/1403 \right)\left( \cos(h_r)/\sin(h_r) \right) - \left( 27/1403 \right) + p_3\left( 6300/1403 \right)}$$

$$a = b\left( \cos(h_r)/\sin(h_r) \right)$$

Further, when

(Numeral 41)

$$|\sin(h_r)| < |\cos(h_r)|$$

is satisfied, the following expressions are calculated.

(Numeral 42)

$$p_5 = p_1 \Big/ \cos(h_r)$$

$$a = \frac{p_2(2+p_3)\left(460\big/1403\right)}{p_5 + (2+p_3)\left(220\big/1403\right) - \left(\left(27\big/1403\right) + p_3\left(6300\big/1403\right)\right)\left(\sin(h_r)\big/\cos(h_r)\right)}$$

$$b = a\left(\sin(h_r)\Big/\cos(h_r)\right)$$

Then, the followings are calculated.

(Numeral 43)

$$Ra' = \frac{460}{1403}p_2 + \frac{451}{1403}a + \frac{288}{1403}b$$

$$Ga' = \frac{460}{1403}p_2 + \frac{891}{1403}a + \frac{261}{1403}b$$

$$Ba' = \frac{460}{1403}p_2 + \frac{220}{1403}a + \frac{6300}{1403}b$$

Next, calculation of non-linear response inverse transform will be explained (step #603).

(Numeral 44)

$$R' = sign(Ra'\text{-}0.1)\cdot \frac{100}{F_L'} \cdot \left(\frac{27.13 \cdot |Ra'\text{-}0.1|}{400 - |Ra'\text{-}0.1|}\right)^{\frac{1}{0.42}}$$

$$G' = sign(Ga'\text{-}0.1)\cdot \frac{100}{F_L'} \cdot \left(\frac{27.13 \cdot |Ga'\text{-}0.1|}{400 - |Ga'\text{-}0.1|}\right)^{\frac{1}{0.42}}$$

$$B' = sign(Ba'\text{-}0.1)\cdot \frac{100}{F_L'} \cdot \left(\frac{27.13 \cdot |Ba'\text{-}0.1|}{400 - |Ba'\text{-}0.1|}\right)^{\frac{1}{0.42}}$$

In this case, sin (x) is a function that takes 1, 0 and -1 respectively for x > 0, x = 0 and x < 0.

Next, calculation of cone response inverse transform will be explained (step #604).

(Numeral 45)

$$\begin{pmatrix} Rc \\ Gc \\ Bc \end{pmatrix} = \begin{pmatrix} 0.7328 & 0.4296 & -0.1624 \\ -0.7036 & 1.6975 & 0.0061 \\ 0.0030 & 0.0136 & 0.9834 \end{pmatrix}\begin{pmatrix} 1.910197 & -1.112124 & 0.201908 \\ 0.370950 & 0.629054 & 0.000008 \\ 0 & 0 & 1 \end{pmatrix}\begin{pmatrix} R' \\ G' \\ B' \end{pmatrix}$$

Next, calculation of chromatic adaptation inverse transform will be explained (step #605).

(Numeral 46)

$$R = \frac{Rc}{\left(Yw'.D/Rw' + 1 - D\right)}$$

$$G = \frac{Gc}{\left(Yw'.D/Gw' + 1 - D\right)}$$

$$B = \frac{Bc}{\left(Yw'.D/Bw' + 1 - D\right)}$$

$$\begin{pmatrix} X'' \\ Y'' \\ Z'' \end{pmatrix} = \begin{pmatrix} 1.096124 & -0.278869 & 0.182745 \\ 0.454369 & 0.473533 & 0.072098 \\ -0.009628 & -0.005698 & 1.015326 \end{pmatrix} \begin{pmatrix} R \\ G \\ B \end{pmatrix}$$

Incidentally, in addition to the CIECAM97s and CIECAM02 used in the present embodiment, there have been published Naya model, Hunt model, RLab model and LLab model which can also be used in place of the CIECAM97s and CIECAM02.

As explained above, when outputting the inputted scene-referred raw data to an output device such as monitor 3 or printer 4, 1) CAM forward transform is conducted by CAM forward transform module 101 for the scene-referred raw data, then, after the CAM forward transform, correction of tones and/or colors is conducted by image correcting module 104, then, after the correction, color area mapping processing according to an output equipment is conducted by gamut mapping module 105, and CAM inverse transform is conducted by CAM inverse transform module 106 after the color area mapping processing, or 2) CAM forward transform is conducted by CAM forward transform module 101 for the scene-referred raw data, then, color area mapping processing according to an output equipment is conducted by gamut mapping module 105 after the CAM forward transform, and CAM inverse transform is conducted by CAM inverse transform module 106 after the color area mapping processing, or 3) CAM forward transform is conducted by CAM forward transform module 101 for the scene-referred raw data, then, color area mapping processing according to an output equipment is conducted by gamut mapping module 105 after the CAM forward transform, then, after the color area mapping processing, correction of tones and/or colors is conducted by image correcting module 104, and CAM inverse transform is conducted by CAM inverse transform module 106 after the correction, thus, image transform based on a color appearance model can be conducted at any time, together with correction of tones and/or colors. Therefore, even when image data having luminance proportional to that of the photographing scene such as the scene-referred raw data are inputted, appropriated image data for output can by prepared at all times. Furthermore, image correcting module 104 and gamut mapping module 105 can be included in image processing module 107.

Incidentally, descriptions in the present embodiment are those showing examples of an image processing apparatus, an image processing method and an image processing program all relating to the invention, and the invention is not limited to the descriptions. Detailed structures and detailed operations of the image processing apparatus 10 in the present embodiment can be modified freely without departing from the spirit and scope of the invention.

**Claims**

1. An image processing apparatus comprising:

   an image forward-transform section for applying an image forward-transform based on a color appearance model to an inputted scene referred raw datum;
   an image processing section for applying a tone and/or color correction using a correction parameter determined based on the scene referred raw datum or information related to the scene referred raw datum, and a gamut mapping corresponding to an output device; and
an image inverse-transform section for applying an image inverse-transform of the image forward-transform after the image processing.

**2.** The image processing apparatus of claim 1,
wherein the image processing section comprises an image correcting section for applying a tone and/or color correction to the scene referred raw datum which is applied the image forward-transform, using a correction parameter determined based on the scene referred raw datum or information related to the scene referred raw datum and
a gamut mapping section for applying a gamut mapping to the corrected data corresponding to the output device.

**3.** The image processing apparatus of claim 2,
wherein the image correcting section applies the tone and/or color correction to the scene referred raw datum applied the image forward-transformation, using a correction parameter related to the scene referred raw datum.

**4.** The image processing apparatus of claim 2, further comprising a photographing condition analyzing section for determining the correcting parameter to the scene referred raw datum using information related,
wherein the image correcting section applies the tone and/or color correction to the scene referred raw datum applied the image forward-transformation, using the determined correction parameter.

**5.** The image processing apparatus of claim 2, further comprising a scene analyzing section for determining the correction parameter using the scene referred raw datum,
wherein the image correcting section applies the tone and/or color correction to the scene referred raw datum applied the image forward-transformation, using the determined correction parameter.

**6.** The image processing apparatus of claim 1,
wherein the image processing section comprises
a gamut mapping section for applying a gamut mapping to the scene referred raw datum which is applied the image forward-transform, corresponding to the output device and
an image correcting section for applying a tone and/or color correction simultaneously with the gamut mapping using the correction parameter determined based on the scene referred raw datum or information related to the scene referred raw datum.

**7.** The image processing apparatus of claim 6,
wherein the image correcting section applies the tone and/or color correction simultaneously with the gamut mapping to the scene referred raw datum which is applied the image forward-transform, using a correction parameter related to the scene referred raw datum.

**8.** The image processing apparatus of claim 6, further comprising a photographing condition analyzing section for determining the correction parameter using information related to the scene referred raw datum,
wherein the image correcting section applies the tone and/or color correction simultaneously with the gamut mapping to the scene referred raw datum which is applied the image forward-transform, using the determined correction parameter.

**9.** The image processing apparatus of claim 6, further comprising a scene condition analyzing section for determining the correction parameter using information related to the scene referred raw datum,
wherein the image correcting section applies the tone and/or color correction simultaneously with the gamut mapping to the scene referred raw datum which is applied the image forward-transform, using the determined correction parameter.

**10.** The image processing apparatus of claim 1,
wherein the image processing section comprises
a gamut mapping section for applying a gamut mapping to the scene referred raw datum which is applied the image forward-transform, corresponding to the output device and
an image correcting section for applying a tone and/or color correction after the gamut mapping using the correction parameter determined based on the scene referred raw datum or information related to the scene referred raw datum.

**11.** The image processing apparatus of claim 10,
wherein the image correcting section applies the tone and/or color correction to the scene referred raw datum which is applied the gamut mapping, using a correction parameter related to the scene referred raw datum.

**12.** The image processing apparatus of claim 10, further comprising a photographing condition analyzing section for determining the correction parameter using information related to the scene referred raw datum,
wherein the image correcting section applies the tone and/or color correction to the scene referred raw datum which is applied the gamut mapping, using the determined correction parameter.

**13.** The image processing apparatus of claim 10, further comprising a scene condition analyzing section for determining the correction parameter using the scene referred raw datum,
wherein the image correcting section applies the tone and/or color correction to the scene referred raw datum which is applied the gamut mapping, using the determined correction parameter.

**14.** The image processing apparatus of claim 1,
wherein the tone and/or color correction is a correction for an image contrast enhancement.

**15.** The image processing apparatus of claim 1,
wherein the tone and/or color correction is a correction for an image chroma enhancement.

**16.** The image processing apparatus of claim 1, wherein the color appearance model is CIECAM97s.

**17.** The image processing apparatus of claim 1, wherein the color appearance model is CIECAM02s.

**18.** The image processing apparatus of claim 1,
wherein the information related to the scene referred raw datum is information representing a photographed-scene type and/or information relating to the photographing condition and the information is added to the tag information area of the scene referred raw datum as meta information.

**19.** An image processing method comprising:

an image forward-transform step of applying an image forward-transform based on a color appearance model to an inputted scene referred raw datum;
an image processing step of applying a tone and/or color correction using a correction parameter determined based on the scene referred raw datum or information related to the scene referred raw datum, and a gamut mapping corresponding to an output device; and
an image inverse-transform step of applying an image inverse-transform of the image forward-transform after the image processing.

**20.** The image processing method of claim 19,
wherein the image processing step comprises an image correcting step for applying a tone and/or color correction to the scene referred raw datum which is applied the image forward-transform, using a correction parameter determined based on the scene referred raw datum or information related to the scene referred raw datum and
a gamut mapping step of applying a gamut mapping to the corrected data corresponding to the output device.

**21.** The image processing method of claim 20,
wherein the image correcting step applies the tone and/or color correction to the scene referred raw datum applied the image forward-transformation, using a correction parameter related to the scene referred raw datum.

**22.** The image processing method of claim 20, further comprising a photographing condition analyzing step of determining the correcting parameter to the scene referred raw datum using information related,
wherein the image correcting step applies the tone and/or color correction to the scene referred raw datum applied the image forward-transformation, using the determined correction parameter.

**23.** The image processing method of claim 20, further comprising a scene analyzing step of determining the correction parameter using the scene referred raw datum,
wherein the image correcting step applies the tone and/or color correction to the scene referred raw datum applied the image forward-transformation, using the determined correction parameter.

24. The image processing method of claim 19,
wherein the image processing step comprises
a gamut mapping step of applying a gamut mapping to the scene referred raw datum which is applied the image forward-transform, corresponding to the output device and
an image correcting step of applying a tone and/or color correction simultaneously with the gamut mapping using the correction parameter determined based on the scene referred raw datum or information related to the scene referred raw datum.

25. The image processing method of claim 24,
wherein the image correcting step applies the tone and/or color correction simultaneously with the gamut mapping to the scene referred raw datum which is applied the image forward-transform, using a correction parameter related to the scene referred raw datum.

26. The image processing method of claim 24, further comprising a photographing condition analyzing step of determining the correction parameter using information related to the scene referred raw datum,
wherein the image correcting step applies the tone and/or color correction simultaneously with the gamut mapping to the scene referred raw datum which is applied the image forward-transform, using the determined correction parameter.

27. The image processing method of claim 24, further comprising a scene condition analyzing step of determining the correction parameter using information related to the scene referred raw datum,
wherein the image correcting step applies the tone and/or color correction simultaneously with the gamut mapping to the scene referred raw datum which is applied the image forward-transform, using the determined correction parameter.

28. The image processing method of claim 19,
wherein the image processing step comprises
a gamut mapping step of applying a gamut mapping to the scene referred raw datum which is applied the image forward-transform, corresponding to the output device and
an image correcting step of applying a tone and/or color correction after the gamut mapping using the correction parameter determined based on the scene referred raw datum or information related to the scene referred raw datum.

29. The image processing method of claim 28,
wherein the image correcting step applies the tone and/or color correction to the scene referred raw datum which is applied the gamut mapping, using a correction parameter related to the scene referred raw datum.

30. The image processing method of claim 28, further comprising a photographing condition analyzing step of determining the correction parameter using information related to the scene referred raw datum,
wherein the image correcting step applies the tone and/or color correction to the scene referred raw datum which is applied the gamut mapping, using the determined correction parameter.

31. The image processing method of claim 28, further comprising a scene condition analyzing step of determining the correction parameter using the scene referred raw datum,
wherein the image correcting step applies the tone and/or color correction to the scene referred raw datum which is applied the gamut mapping, using the determined correction parameter.

32. The image processing method of claim 19,
wherein the tone and/or color correction is a correction for an image contrast enhancement.

33. The image processing method of claim 19,
wherein the tone and/or color correction is a correction for an image chroma enhancement.

34. The image processing method of claim 19, wherein the color appearance model is CIECAM97s.

35. The image processing method of claim 19, wherein the color appearance model is CIECAM02s.

**36.** The image processing method of claim 19,

wherein the information related to the scene referred raw datum is information representing a photographed-scene type and/or information relating to the photographing condition and the information is added to the tag information area of the scene referred raw datum as meta information.

**37.** An image processing program comprising:

an image forward-transform step of applying an image forward-transform based on a color appearance model to an inputted scene referred raw datum;

an image processing step of applying a tone and/or color correction using a correction parameter determined based on the scene referred raw datum or information related to the scene referred raw datum, and a gamut mapping corresponding to an output device; and

an image inverse-transform step of applying an image inverse-transform of the image forward-transform after the image processing.

**38.** The image processing program of claim 37,

wherein the image processing step comprises an image correcting step of applying a tone and/or color correction to the scene referred raw datum which is applied the image forward-transform, using a correction parameter determined based on the scene referred raw datum or information related to the scene referred raw datum and

a gamut mapping step of applying a gamut mapping to the corrected data corresponding to the output device.

**39.** The image processing program of claim 38,

wherein the image correcting step applies the tone and/or color correction to the scene referred raw datum applied the image forward-transformation, using a correction parameter related to the scene referred raw datum.

**40.** The image processing program of claim 38, further comprising a photographing condition analyzing step of determining the correcting parameter to the scene referred raw datum using information related,

wherein the image correcting step applies the tone and/or color correction to the scene referred raw datum applied the image forward-transformation, using the determined correction parameter.

**41.** The image processing program of claim 38, further comprising a scene analyzing step of determining the correction parameter using the scene referred raw datum,

wherein the image correcting step applies the tone and/or color correction to the scene referred raw datum applied the image forward-transformation, using the determined correction parameter.

**42.** The image processing program of claim 37,

wherein the image processing step comprises

a gamut mapping step of applying a gamut mapping to the scene referred raw datum which is applied the image forward-transform, corresponding to the output device and

an image correcting step of applying a tone and/or color correction simultaneously with the gamut mapping using the correction parameter determined based on the scene referred raw datum or information related to the scene referred raw datum.

**43.** The image processing program of claim 42,

wherein the image correcting step applies the tone and/or color correction simultaneously with the gamut mapping to the scene referred raw datum which is applied the image forward-transform, using a correction parameter related to the scene referred raw datum.

**44.** The image processing program of claim 42, further comprising a photographing condition analyzing step of determining the correction parameter using information related to the scene referred raw datum,

wherein the image correcting step applies the tone and/or color correction simultaneously with the gamut mapping to the scene referred raw datum which is applied the image forward-transform, using the determined correction parameter.

**45.** The image processing program of claim 42, further comprising a scene condition analyzing step of determining the correction parameter using information related to the scene referred raw datum,

wherein the image correcting step applies the tone and/or color correction simultaneously with the gamut mapping to the scene referred raw datum which is applied the image forward-transform, using the determined correction parameter.

**46.** The image processing program of claim 37,
wherein the image processing step comprises
a gamut mapping step of applying a gamut mapping to the scene referred raw datum which is applied the image forward-transform, corresponding to the output device and
an image correcting step of applying a tone and/or color correction after the gamut mapping using the correction parameter determined based on the scene referred raw datum or information related to the scene referred raw datum.

**47.** The image processing program of claim 46,
wherein the image correcting step applies the tone and/or color correction to the scene referred raw datum which is applied the gamut mapping, using a correction parameter related to the scene referred raw datum.

**48.** The image processing program of claim 46, further comprising a photographing condition analyzing step of determining the correction parameter using information related to the scene referred raw datum,
wherein the image correcting step applies the tone and/or color correction to the scene referred raw datum which is applied the gamut mapping, using the determined correction parameter.

**49.** The image processing program of claim 46, further comprising a scene condition analyzing step of determining the correction parameter using the scene referred raw datum,
wherein the image correcting step applies the tone and/or color correction to the scene referred raw datum which is applied the gamut mapping, using the determined correction parameter.

**50.** The image processing program of claim 37,
wherein the tone and/or color correction is a correction for an image contrast enhancement.

**51.** The image processing program of claim 37,
wherein the tone and/or color correction is a correction for an image chroma enhancement.

**52.** The image processing program of claim 37, wherein the color appearance model is CIECAM97s.

**53.** The image processing program of claim 37, wherein the color appearance model is CIECAM02s.

**54.** The image processing program of claim 37,
wherein the information related to the scene referred raw datum is information representing a photographed-scene type and/or information relating to the photographing condition and the information is added to the tag information area of the scene referred raw datum as meta information.

# FIG. 1

DIGITAL CAMERA 2 → IMAGE FILE 6 → IMAGE PROCESSING APPARATUS 10

DIGITAL CAMERA ICC PROFILE 21

APPLICATION SOFTWARE 1

IMAGE FILE 7

MONITOR 3

MONITOR ICC PROFILE 31

PRINTER 4

PRINTER ICC PROFILE 41

EP 1 558 020 A2

# FIG. 2

OPTICAL SYSTEM 202

FIG. 3

# FIG. 4

DIGITAL CAMERA — 2

SCENE-REFERRED IMAGE DATA + ADDITIONAL DATA — 6

CAM FORWARD TRANSFORM MODULE — 101
INPUT SIDE APPEARANCE PARAMETER (DEFAULT)

Image

SCENE ANALYSIS MODULE — 102

PHOTOGRAPHING DATA ANALYSIS MODULE — 103

GAMUT MAPPING MODULE (IMAGE CORRECTING MODULE) — 105

Image

CAM INVERSE TRANSFORM MODULE — 106
OUTPUT SIDE APPEARANCE PARAMETER (DEFAULT)

Output Image

APPLICATION SOFTWARE — 11

40

# FIG. 5

SCENE-REFERRED IMAGE DATA + ADDITIONAL DATA (6)

CAM FORWARD TRANSFORM MODULE (101) — INPUT SIDE APPEARANCE PARAMETER (DEFAULT)

Image

GAMUT MAPPING MODULE (105)

IMAGE PROCESSING MODULE

Image

SCENE ANALYSIS MODULE (102)

IMAGE CORRECTING MODULE (104) — 107

Image

CAM INVERSE TRANSFORM MODULE (106) — OUTPUT SIDE APPEARANCE PARAMETER (DEFAULT)

Output Image

PHOTOGRAPHING DATA ANALYSIS MODULE (103)

APPLICATION SOFTWARE (12)

DIGITAL CAMERA (2)

DIGITAL CAMERA ICC PROFILE (21)

EP 1 558 020 A2

# FIG. 6

```
                    ( Start )
                        │
                        ▼
            ┌───────────────────────┐
            │    INITIALIZATION     │───── #001
            └───────────────────────┘
                        │
                        ▼
            ┌───────────────────────┐
            │    IMAGE READING      │───── #002
            └───────────────────────┘
                        │ N
                        ▼         #003
                   ╱─────────╲
                  ╱  IS SCENE  ╲         Y
            ◄────╱ INFORMATION  ╲────────────────────┐
                 ╲  PRESENT?    ╱                     │
                  ╲─────────╱                         │
                        │ N                           │
                        ▼         #004                │
                   ╱─────────╲                        │
                  ╱   IS Exif  ╲        Y             │
                 ╱ INFORMATION  ╲───────────┐         │
                 ╲  PRESENT?    ╱           │         │
                  ╲─────────╱               │         │
                        │ #005             ▼ #006     │
            ┌───────────────────────┐  ┌──────────────────┐
            │    SCENE ANALYSIS     │  │  PHOTOGRAPHING   │
            │                       │  │  DATA ANALYSIS   │
            └───────────────────────┘  └──────────────────┘
                        │                  │            │
                        ▼◄─────────────────┘◄───────────┘
            ┌───────────────────────┐
            │  APPEARANCE MODEL     │───── #007
            │     TRANSFORM         │
            └───────────────────────┘
                        │
                        ▼
            ┌───────────────────────┐
            │   IMAGE CORRECTION    │───── #008
            └───────────────────────┘
                        │
                        ▼
            ┌───────────────────────┐
            │    GAMUT MAPPING      │───── #009
            └───────────────────────┘
                        │
                        ▼
            ┌───────────────────────┐
            │  APPEARANCE MODEL     │───── #010
            │  INVERSE TRANSFORM    │
            └───────────────────────┘
                        │
                        ▼
            ┌───────────────────────┐
            │    IMAGE OUTPUT       │───── #011
            └───────────────────────┘
                        │
                        ▼
                    ( End )
```

# FIG. 7

```
           ┌──────────┐
           │  Start   │
           └──────────┘
                │
                ▼
    ┌──────────────────────┐
    │  PORTRAIT DEGREE     │ ──── #101
    │  (P) CALCULATION     │
    └──────────────────────┘
                │
                ▼
    ┌──────────────────────┐
    │  LANDSCAPE DEGREE    │ ──── #102
    │  (L) CALCULATION     │
    └──────────────────────┘
                │          #103
                ▼
              ╱ ╲
            ╱     ╲        Y
           ╱  P = L ╲ ──────────────────────────────┐
           ╲       ╱                                 │
            ╲     ╱                                   │
              ╲ ╱                                     │
               │ N      #104                          │
               ▼                                      │
              ╱ ╲                                     │
            ╱     ╲        N                          │
           ╱  P > L ╲ ───────────────┐               │
           ╲       ╱                 │               │
            ╲     ╱    #105          │    #106       │
              ╲ ╱                    │               │
               │ Y                   ▼               │
    ┌──────────────────┐   ┌──────────────────┐      │
    │  PORTRAIT FLAG   │   │  LANDSCAPE FLAG  │      │
    │  SETTING         │   │  SETTING         │      │
    └──────────────────┘   └──────────────────┘      │
               │                    │                │
               ◀────────────────────┴────────────────┘
               │
               ▼
           ┌──────────┐
           │   End    │
           └──────────┘
```

## FIG. 8 ( a )

X-axis: CONTROL LUMINANCE (Bv)
Legend: PORTRAIT, LANDSCAPE

## FIG. 8 ( b )

X-axis: IMAGE MAGNIFICATION ($1/\beta$)
Legend: PORTRAIT, LANDSCAPE

## FIG. 8 ( c )

X-axis: FOCAL LENGTH (mm)
Legend: PORTRAIT, LANDSCAPE

# FIG. 9

R, G, B

APPEARANCE PARAMETER

Xw, Yw, Zw
$L_A$
Yb
c, Nc, $F_{LL}$, F

#201

RGB → XYZ
TRANSFORM

X, Y, Z

#203

CHROMATIC
ADAPTATION
TRANSFORM

#202

APPEARANCE
PARAMETER
TRANSFORM

Rc, Gc, Bc

k, $F_L$, n, Nbb, Ncb, z

#204

CONE RESPONSE
TRANSFORM

R', G', B'

#205

NON-LINEAR
RESPONSE
TRANSFORM

Ra', Ga', Ba'

#206

CALCULATION
OF COLOR
APPEARANCE
VALUE

h, J, C

# FIG. 10

```
                    ┌──────────────┐
                    │    Start     │
                    └──────────────┘
                            │
                    ┌──────────────┐
                    │  RESETTING   │
                    │ COUNT VALUE  │──── #301
                    └──────────────┘
                            │
                            ▼ ◄──────────────────────────┐
                        ╱───────╲      #302               │
                      ╱           ╲                       │
                    ╱  FLESH COLOR  ╲    N                │
                    ╲     AREA?      ╱─────────┐          │
                      ╲           ╱            │          │
                        ╲───────╱              │          │
                            │ Y                │          │
                    ┌──────────────┐           │          │
                    │ FLESH COLOR  │           │          │
                    │COUNT VALUE + 1│──── #303  │          │
                    └──────────────┘           │          │
                            │ ◄────────────────┘          │
                    ┌──────────────┐                      │
                    │ COUNT VALUE  │──── #304             │
                    │     + 1      │                      │
                    └──────────────┘                      │
                            │                             │
                        ╱───────╲      #305               │
                      ╱           ╲                       │
                    ╱   TOTAL PIXEL  ╲    N               │
                    ╲      END?      ╱────────────────────┘
                      ╲           ╱
                        ╲───────╱
                            │ Y
                        ╱───────╲      #306
                      ╱           ╲
                    ╱ FLESH COLOR   ╲    N
                    ╲  RATE > TH    ╱──────────┐
                      ╲           ╱            │
                        ╲───────╱             │
                            │ Y   #307        │   #308
                    ┌──────────────┐   ┌──────────────┐
                    │ PORTRAIT FLAG │   │ PORTRAIT FLAG │
                    │   SETTING    │   │  RESETTING   │
                    └──────────────┘   └──────────────┘
                            │                 │
                            │ ◄───────────────┘
                    ┌──────────────┐
                    │     End      │
                    └──────────────┘
```

# FIG. 11

```
                    ┌─────────────┐
                    │    Start    │
                    └─────────────┘
                           │
                           │        #401
                          ╱ ╲
                        ╱     ╲
                      ╱  IS Exif ╲        N
                     ⟨ INFORMATION ⟩─────────────────┐
                      ╲ PRESENT ? ╱                  │
                        ╲       ╱                     │
                          ╲   ╱                       │
                      Y      ╲    #402          #403  │
                           │                          │
              ┌────────────────────┐    ┌────────────────────┐
              │ LUMINANCE SETTING  │    │  DEFAULT LUMINANCE │
              │  FROM CONTROL Bv   │    │      SETTING       │
              └────────────────────┘    └────────────────────┘
                           │                          │
                           │←─────────────────────────┘
                           │
              ┌────────────────────┐
              │ APPEARANCE CORRECTION │
              │ COEFFICIENT · LUT SETTING │──── #404
              └────────────────────┘
                           │
                          ╱ ╲      #405
                        ╱     ╲
                      ╱ PORTRAIT ╲     N
                     ⟨   FLAG      ⟩─────────────────┐
                      ╲ SETTING?  ╱                  │
                        ╲       ╱                     │
                          ╲   ╱                       │
                      Y      ╲    #406          #407  │
                           │                          │
              ┌────────────────────┐    ┌────────────────────┐
              │  SETTING OF LUT    │    │    SETTING OF      │
              │   FOR PERSON       │    │   ORDINARY LUT     │
              └────────────────────┘    └────────────────────┘
                           │                          │
                           │←─────────────────────────┘
                           │
              ┌────────────────────┐
              │   LUT TRANSFORM    │
              │  CHROMA CORRECTION │──── #408
              └────────────────────┘
                           │
                    ┌─────────────┐
                    │     End     │
                    └─────────────┘
```

# FIG. 12

# FIG. 13

```
                    ┌─────────┐
                    │  Start  │
                    └─────────┘
                         │
                         ▼
        ┌──────────────────────────────┐
        │  CALCULATION OF COLORIMETRY  │
        │    VALUE FOR SIX PRIMARY     │──── #501
        │    COLORS AT INPUT SIDE      │
        └──────────────────────────────┘
                         │
                         ▼
        ┌──────────────────────────────┐
        │    CALCULATION OF CHROMA     │
        │    VALUE FOR SIX PRIMARY     │──── #502
        │    COLORS AT INPUT SIDE      │
        └──────────────────────────────┘
                         │
                         ▼
        ┌──────────────────────────────┐
        │  CALCULATION OF COLORIMETRY  │
        │    VALUE FOR SIX PRIMARY     │──── #503
        │    COLORS AT OUTPUT SIDE     │
        └──────────────────────────────┘
                         │
                         ▼
        ┌──────────────────────────────┐
        │    CALCULATION OF CHROMA     │
        │    VALUE FOR SIX PRIMARY     │──── #504
        │    COLORS AT OUTPUT SIDE     │
        └──────────────────────────────┘
                         │
                         ▼
        ┌──────────────────────────────┐
        │        CALCULATION OF        │──── #505
        │  Cout(i)/Cin(i) MINIMUM VALUE│
        └──────────────────────────────┘
                         │
                         ▼
        ┌──────────────────────────────┐
        │     COUNT VALUE RESETTING    │──── #506
        └──────────────────────────────┘
                         │
                         ▼
        ┌──────────────────────────────┐
        │     CHROMA COMPRESSION       │──── #507
        └──────────────────────────────┘
                         │
                         ▼            #508
                    ╱─────────╲       N
                   ╱  TOTAL    ╲──────────►
                   ╲ PIXEL END?╱
                    ╲─────────╱
                         │ Y
                         ▼
                    ┌─────────┐
                    │   End   │
                    └─────────┘
```

# FIG. 14

h, J', C'

#602

```
CALCULATION OF
NON-LINEAR
RESPONSE
FROM COLOR
APPEARANCE
VALUE
```

APPEARANCE PARAMETER

Xw', Yw', Zw'
LA'
Yb'
c', Nc', F$_{LL}$', F'

Ra', Ga', Ba'

#603

```
NON-LINEAR
RESPONSE
INVERSE
TRANSFORM
```

#601

```
APPEARANCE
PARAMETER
TRANSFORM
```

R', G', B'

#604

```
CONE RESPONSE
INVERSE
TRANSFORM
```

k', FL', n', Nbb',
Ncb', z'

Rc, Gc, Bc

#605

```
CHROMATIC
ADAPTATION
INVERSE
TRANSFORM
```

X", Y", Z"

#606

```
X"Y"Z" → RGB
TRANSFORM
```

R, G, B

# FIG. 15

## FIG. 16 (a)

## FIG. 16 (b)

FIG. 17